(19) Europäisches Patentamt
European Patent Office
Office européen des brevets

(11) **EP 2 442 052 A1**

(12) **EUROPÄISCHE PATENTANMELDUNG**

(43) Veröffentlichungstag:
**18.04.2012 Patentblatt 2012/16**

(51) Int Cl.:
*F25B 30/02* *(2006.01)*     *G05D 23/19* *(2006.01)*

(21) Anmeldenummer: **10013546.6**

(22) Anmeldetag: **12.10.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Immosolar Active Building Technologies, S.L.**
**07180 Santa Ponsa (Calvia) Islas Baleares (ES)**

(72) Erfinder: **Vogel, Holger**
**07160 Peguera / Mallorca (ES)**

(74) Vertreter: **Sasse, Stefan**
**White & Case LLP**
**Jungfernstieg 51**
**20354 Hamburg (DE)**

(54) **Verfahren zur regelung, welches in einer Heizungsanlage ausgeführt wird**

(57) Verfahren zur Regelung, welches in einer Heizungsanlage ausgeführt wird, die eine Wärmequelle und eine Pumpe in einem Heizkreislauf aufweist, der von einem fluiden Energieträgermedium durchflossen ist und der einen Verbraucherverbund mit mindestens einem Verbraucher, einer Verbraucherverbundvorlaufleitung und einer Verbraucherverbundrücklaufleitung aufweist, **dadurch gekennzeichnet, dass** ein Regler durch Stellen der Pumpe eine Temperaturdifferenz des Energieträgermediums zwischen der Verbraucherverbundvorlaufleitung und der Verbraucherverbundrücklaufleitung (Pumpen-Regelgröße) anhand einer einstellbaren Vor- und/oder Rücklauftemperatursollgröße (Mischventil-Referenzgröße) regelt.

**EP 2 442 052 A1**

**Beschreibung**

Die Erfindung betrifft ein Verfahren zur Regelung, welches in einer Heizungsanlage ausgeführt wird und/oder eine Vorrichtung zur Regelung in einer Heizungsanlage, die eine Wärmequelle und eine Pumpe in einem Heizkreislauf aufweist, der von einem fluiden Energieträgermedium durchflossen ist und der einen Verbraucherverbund mit mindestens einem Verbraucher, einer Verbraucherverbundvorlaufleitung und einer Verbraucherverbundrücklaufleitung aufweist.

**<u>Stand der Technik:</u>**

Folgende Verfahren und Vorrichtungen zur Regelung von Heizungsanlagen sind bereits bekannt. Typische Heizungsanlagen weisen zumindest einen Heizkreislauf auf, der eine Wärmequelle, eine Pumpe und mindestens einen Verbraucher umfasst. Um eine Wärmeleistung von der Wärmequelle zu dem Verbraucher zu übertragen, ist der Heizkreislauf von einem fluiden Energieträgermedium, insbesondere Wasser, durchflossen. Für den Fluidstrom sorgt die Pumpe. Diese pumpt bei einem geschlossenen Kreislauf beispielsweise das Wasser von der Wärmequelle durch eine Verbrauchervorlaufleitung zum Verbraucher. Das Wasser durchströmt den Verbraucher und gibt dabei Wärmeenergie an diesen und an die Umgebung ab. Vom Verbraucher strömt das Wasser durch die Verbraucherrücklaufleitung zurück zu der Wärmequelle. Die Wärmequelle überträgt an das zurückkommende Wasser erneut Wärmeleistung, sodass das nun wieder erwärmte Wasser durch die Pumpe und Vorlaufleitung wieder zum Verbraucher transportiert wird.

Anstelle des genannten einen Verbrauchers können auch mehrere Verbraucher, insbesondere in Reihe oder parallel zueinander verkoppelt, vorgesehen sein. Ferner können dies auch verschiedene Arten von Verbrauchern, insbesondere für Heizzwecke, Brauchwassererwärmung, Schwimmbad, Klimaanlagen und/oder andere Zwecke, sein.

Ferner ist es aus dem Stand der Technik bekannt, dass insbesondere jedem Verbraucher ein Ventil zugeordnet ist, das in Abhängigkeit der Leistungsanforderung des jeweiligen Verbrauchers den Zufluss eines fluiden Energieträgermediums zu diesem Verbraucher steuert beziehungsweise regelt. Bei einer Parallelschaltung von mehreren Verbrauchern kann ein solches Ventil auch in der Verbrauchervorlaufleitung angeordnet sein.

Eine bekannte Ausgestaltungsvariante eines Heizkreislaufes ist die Einrohr-Heizungsanlage, wie sie beispielsweise in der DE 4124304 C2 beschrieben ist. Bei dieser Variante sind drei Verbraucher in Reihe miteinander gekoppelt. Die Verbraucherverbundvorlaufleitung endet an dem ersten Dreiwegeventil des ersten Verbrauchers. Von dem ersten Dreiwegeventil führt die erste Verbrauchervorlaufleitung zu dem ersten Verbraucher. Von dem Dreiwegeventil führt ferner eine Bypassleitung zu der Verbraucherrücklaufleitung des ersten Verbrauchers. Die Verbraucherrücklaufleitung des ersten Verbrauchers ist zudem mit der Vorlaufleitung des zweiten Verbrauchers gekoppelt, von der wiederum eine weitere Bypassleitung abzweigt. Diese Art der Verkopplung setzt sich für alle weiteren Verbraucher fort. Die Verbraucherrücklaufleitung des letzten Verbrauchers ist mit der Verbraucherverbundrücklaufleitung gekoppelt. Jedes der drei Dreiwegeventile ist in der Weise in den Heizkreislauf eingebunden, dass ein Fluidzulauf durch das Ventil zu dem zugeordneten Verbraucher oder einem nachfolgenden Verbraucher gelenkt und/oder dosiert werden kann.

Der Zweck jedes der zuvor genannten Dreiwegeventile oder der davor genannten $_n$normalen" Ventile ist es, durch den Zustand des Ventils, insbesondere durch die Ventilstellung und/oder den Ventilhub, den Fluiddurchfluss zu dem jeweiligen Verbraucher zu steuern, also grundsätzlich zu ermöglichen, aber auch zu limitieren oder zu unterbinden.

Aus dem Stand der Technik ist bekannt, dass derartige Ventile auch Thermostatventile sein können. Sie messen beispielsweise die Zulauftemperatur oder die Umgebungstemperatur, um anhand des jeweiligen Messergebnisses das Ventil zu steuern.

Derartigen, aus dem Stand der Technik bekannten Heizungsanlagen ist gemeinsam, dass die Übertragung von Wärmeleistung an einen Verbraucher durch dessen Ventile steuerbar ist. Sind mehrere Verbraucher zu einem Verbraucherverbund miteinander verkoppelt, hat dieser Verbraucherverbund vielfach eine sich mit der Zeit verändernde kumulative Leistungsanforderung. Im Stand der Technik erfolgt die Bereitstellung der Wärmeenergie durch eine Wärmequelle, deren Wärmeleistung eine Pumpe in einem Heizkreislauf durch ein fluides Energieträgermedium zu dem Verbraucherverbund überträgt. Die Pumpe einer derartigen Heizungsanlage wird für gewöhnlich druckgeregelt, so dass unabhängig von der Leistungsanforderung in der Verbraucherverbundvorlaufleitung ein bestimmter Druck gehalten oder auf einen bestimmten Druck geregelt wird. Eine derartige Festdruckregelung der Pumpe hat den Vorteil, dass in der Verbrauchervorlaufleitung eines jeden Verbrauchers ein Mindestdruck erreichbar ist.

In Abhängigkeit der Lelstungsanforderungen eines Verbrauches in einem Verbraucherverbund kann eine Druckregelung der Pumpe aber auch nachteilig sein. Dies soll beispielhaft für einen Verbraucherverbund mit drei Verbrauchern, die in einem Einrohrheizkreislauf angeordnet sind, erläutert werden. Darin haben die ersten beiden Verbraucher eines Verbraucherverbundes eines Einrohrheizkreislaufes keine Leistungsanforderung, und die einzige Leistungsanforderung des Verbraucherverbundes ist die Leistungsanforderung des letzten (dritten) Verbrauchers. Das von der Verbraucherverbundvorlaufleitung kommende Fluid wird in diesem Fall über die Bypassleitung an den ersten beiden Verbrauchern vorbeigeleitet und kühlt sich folglich nicht im ersten und/oder zweiten Verbraucher ab, bevor es in den dritten Verbraucher eintritt. Ferner fällt deshalb auch der Druck im Wesentlichen nicht über dem ersten Verbraucher und/oder zweiten Verbraucher ab. Die von dem fluiden Energieträgermedium übertragbare Leistung der Wärmequelle könnte also ungehindert auf den dritten Verbraucher übertragen werden. In der Praxis übersteigt dies jedoch vielfach die Leistungsanforderung eines derartigen (dritten) Verbrauchers, denn die Wärmequelle könnte eine deutlich höhere Leistung, nämlich die für alle drei Verbraucher, bereitstellen. Übersteigt die Leistungsbereitstellung die Lelstungsanforderung eines (dritten) Verbrauchers, so fällt die Temperatur über dem Verbraucher, in dem hier beschriebenen Fall über dem dritten Verbraucher, nur geringfügig ab, sodass eine hohe Wärmeleistung des fluiden Energieträgermediums durch die Verbraucherverbundrücklaufleitung zurück an die Wärmequelle übertragen wird.

**Aufgabenstellung:**

Die Aufgabe der vorliegenden Erfindung ist es, die bekannten Verfahren und Vorrichtungen zur Regelung, welche in einer Heizungsanlage ausgeführt werden, dahingehend zu verbessern, dass das Verhältnis einer dem Verbraucherverbund zugeführten Leistung zu einer vom Verbraucherverbund aufgenommenen Leistung optimiert ist bzw. das Verhältnis möglichst klein ist. Dabei sollte der Verbraucher bzw. der Verbraucherverbund jedoch mit der anforderten Leistung versorgt sein.

Eine weitere Aufgabe der vorliegenden Erfindung ist es, eine Vorrichtung und ein Verfahren zur Regelung in einer Heizungsanlage bereitzustellen, die eine Verlustleistung des Heizkreislaufes verringert.

**Beschreibung:**

Diese Aufgaben werden erfindungsgemäß durch ein Verfahren nach Anspruch 1 und/oder durch eine Vorrichtung nach Anspruch 15 gelöst. Weitere Merkmale der Erfindung sind in den Unteransprüchen beschrieben.

Das erfindungsgemäße Verfahren zur Regelung wird in einer Heizungsanlage ausgeführt, die eine Wärmequelle und eine Pumpe in einem Heizkreislauf aufweist, der von einem fluiden Energieträgermedium durchflossen ist und der einen Verbraucherverbund mit mindestens einem Verbraucher, einer Verbraucherverbundvoriaufleitung und einer Verbraucherverbundrücklaufleitung aufweist. Das Verfahren zeichnet sich dadurch aus, dass ein Regler durch Stellen der Pumpe eine Temperaturdifferenz des Energieträgermediums zwischen der Verbraucherverbundvorlaufleitung und der Verbraucherverbundrücklaufleitung .(Pumpen-Regelgröße) anhand einer einstellbaren Vor- und/oder Rückfauftemperatursollgröße (Mischventil-Referenzgröße) regelt.

Aus dem Stand der Technik sind verschiedenste Ausführungsformen von Heizungsanlagen bekannt, die eine Wärmequelle und eine Pumpe in einem Heizkreislauf aufweisen, der von einem fluiden Energieträgermedium durchflossen ist. Eine Wärmequelle kann dazu beispielsweise eine Therme, ein Boiler und/oder ein Wärmetauscher sein. Grundsätzlich kann eine Wärmequelle eine Wärmeleistung auf ein fluides Energieträgermedium übertragen. Unter einem Heizkreislauf kann eine beliebige, sinnvolle Verkopplung von Elementen einer Heizungsanlage verstanden werden, die es ermöglicht, ein fluides Energieträgermedium in dem Heizkreislauf zirkulieren zu lassen. Das fluide Energieträgermedium kann Wasser oder ein beliebiges anderes fluides Medium sein, das vorzugsweise eine hohe spezifische Wärmekapazität aufweist.

Unter einem Verbraucher im Sinne der Erfindung kann ein Bauteil verstanden werden, an das eine thermische Leistung übertragbar ist und/oder das dazu geeignet ist, Energie des Energieträgermediums an ein anderes Medium zu übertragen. Ein Verbraucher kann also beispielsweise ein Wärmetauscher sein, der in einem Raum (eines Gebäudes) platziert ist, um Energie des Energieträgermediums an die Luft des Raumes zu übertragen, sodass der Raum erwärmt wird. Verbraucher sind also insbesondere diejenigen Bauteile, an die Energie des fluiden Energieträgermediums übertragen werden kann.

Es ist vorgesehen, dass der Heizkreislauf vorzugsweise einen Verbraucherverbund mit mindestens einen Verbraucher aufweist. Genau einen Verbraucher weist der Verbraucherverbund vorzugweise dann auf, wenn der eine Verbraucher sich nicht dazu eignet, mit anderen Verbrauchern gekoppelt zu sein. Dieser Fall kann beispielsweise dann vorliegen, wenn der Verbraucher von einem anderen Verbraucher weit entfernt bzw. beabstandet ist und/oder mit einer hohen Verlustleistung durch eine Verkopplung zu rechnen wäre. Hingegen weist ein Verbraucherverbund bevorzugt mehrere Verbraucher auf, wenn sich diese geeignet miteinander verkoppeln lassen, beispielsweise wenn sie von gleicher Art sind. So können beispielsweise mehrere Wärmetauscher, die beispielsweise zur Erwärmung eines Raumes einsetzbar sind, miteinander verkoppelt sein.

Ein Verbraucherverbund weist ferner eine Verbraucherverbundvorlaufleitung und eine Verbraucherverbunddrücklaufleitung auf. Die Verbraucherverbundvorlaufleitung ist diejenige Leitung, durch die das fluide Energieträgermedium dem Verbraucherverbund zugeführt werden kann. Die Verbraucherverbundrücklaufleitung ist diejenige Leitung, durch die ein fluides Energieträgermedium abgeführt werden kann. Im Sinne der Erfindung ist das Verfahren zur Regelung nicht darauf beschränkt, dass Energie des Energieträgermediums an einen Verbraucher übertragen werden kann, sondern es ist ebenfalls. möglich, dass Energie des Verbrauchers an das Energieträgermedium übertragbar ist. Die Heizungsanlage kann somit auch als thermodynamische Anlage verstanden werden. In diesem Sinne eignet sich das Verfahren zur Regelung sowohl zur Erwärmung als auch zur Kühlung von Verbrauchern.

Das erfindungsgemäße Verfahren kennzeichnet sich dadurch, dass ein Regler durch Stellen einer Pumpe eine Temperaturdifferenz des Energieträgermediums zwischen der Verbraucherverbundvorlaufleitung und der Verbraucherverbundrücklaufleitung (Pumpenregelgröße) regelt. Die Pumpenregelgröße ist also die Differenz zwischen der Temperatur des Energieträgermediums in der Verbraucherverbundvorlaufleitung und der Temperatur des Energieträgermediums der Verbraucherrücklaufleitung. Da sich eine Temperatur kontinuierlich ändert, kann es vorgesehen sein, die Temperaturen kontinuierlich zu messen. Es kann ferner vorgesehen sein, dass die Temperaturen diskretisiert, zu diskreten Zeitpunkten gemessen werden und/oder als digitales Signal an den Regler übertragen werden. Auch ist es möglich, dass die Temperaturdifferenz zu diskreten Zeitpunkten aufgenommen wird. Grundsätzlich ist es aber auch möglich, dass die Temperaturdifferenz als Analogsignal an den Regler übermittelt wird.

Grundsätzlich kann dem Regler eine Pumpenreferenzgröße vorgegeben sein. Dies kann beispielsweise eine von außen vorgebbare Pumpenreferenzgröße sein oder eine Größe sein, die dem Regler eingeprägt lst, beispielsweise auf einem Speicher gespeichert ist. In einer bevorzugten Ausgestaltung vergleicht der Regler die Pumpenreferenzgröße mit der Pumpenregelgröße und stellt die Pumpe in der Weise, dass eine Abweichung zwischen den zuvor genannten Größen möglichst klein ist, bzw. im Idealfall möglichst nicht auftritt.

Zur Erläuterung der Vorteile des erfindungsgemäßen Verfahrens zur Regelung sind mehrere Aspekte zu berücksichtigen. Allen Aspekten zugrundeliegend ist jedoch der Wirkungsgrad eines Verbrauchers bzw. der Wirkungsgrad eines Verbraucherverbundes. Bereits eingangs wurde erläutert, dass ein Verbraucher beispielsweise ein Wärmeübertrager oder Radiator sein kann.

Beispielhaft an einem realen Wärmeübertrager sollen die Vorteile des erfindungsgemäßen Verfahrens zur Regelung verdeutlicht werden. Der diesem Beispiel zugrundeliegende Wärmeübertrager ist in einem Raum installiert, um Wärmeenergie des fluiden Energieträgermediums an die Luft des Raumes zu übertragen. Die Luft des Raumes soll also erwärmt werden. Eine Kühlung der Raumluft soll nicht erfolgen. Im Sinne des ersten Hauptsatzes der Thermodynamik bestimmt sich der Wirkungsgrad eines derartigen Wärmeübertragers aus dem Verhältnis von der an die Luft übertragbaren thermischen Leistung zu der dem Verbraucher zugeführten thermischen und mechanischen Leistung. Unter Berücksichtigung dieses Verhältnisses weist ein realer Wärmetauscher verschiedene Extrema auf. Ein erstes Extremum ist erreicht, wenn die Temperatur des fluiden Energieträgermediums der Temperatur der Luft des Raumes entspricht. In diesem Fall findet am Wärmeübertrager keine Übertragung von thermischer Leistung statt. Da die Pumpe jedoch das fluide Energieträgermedium durch den Wärmetauscher pumpt, entsteht an diesem Verbraucher eine mechanische Verlustleistung. Der Wärmetauscher bzw, ein Verbraucher und/oder Verbraucherverbund haben eine Vor- und Rücklaufleitung. Die Wärmedämmung solcher Leitungen ist real aber nur endlich groß. Die Vor- und Rücklaufleitung sind deshalb vielfach dafür verantwortlich, dass ungewollt thermische Leistung an andere Stoffe übertragen wird, sodass neben der mechanischen Verlustleistung auch eine thermische Verlustleistung auftritt. Diese nur exemplarisch genannten Verlustleistungen sollen zusammenfassend im folgenden als Verlustleistung benannt sein.

Auch im zuvor beschriebenen ersten Fall, in dem keine thermische Leistung an die Luft des Raumes übertragen wird, tritt eine Verlustleistung auf, sodass sich diese negativ auf den Wirkungsgrad auswirkt.

Ein zweites Extremum des Wirkungsgrades ist durch die real begrenzte Austauschfläche eines Wärmeübertragers charakterisiert. Hat das fluide Energieträgermedium eine etwas höhere Temperatur als die Luft des Raumes, können die Austauschflächen elnes Wärmeübertragers ausreichend gut Wärmeenergie von dem fluiden Energieträgermedium an die Luft übertragen. Hat das fluide Energieträgermedium hingegen eine deutlich bis extrem höhere Temperatur als die Luft des Raumes, so führt die real begrenzte Austauschfläche des Wärmeübertragers zu einer realen Begrenzung der Übertragung der Energie von dem fluiden Energieträgermedium zu der Luft des Raumes. Im Extremfall kühlt das fluide Energieträgermedium nur unwesentlich ab. Es wird nur "im Kreis" gepumpt. Auch für dieses Extremum ist der Wirkungsgrad gering. Denn das Verhältnis von der an die Luft übertragenen Leistung zu der dem Wärmeübertrager zugeführten Leistung ist vergleichsweise klein.

Zwischen den beiden zuvor genannten Extrema liegt ein Optimum mit einer optimalen Temperatur des fluiden Energieträgermediums. Bei diesem Optimum ist der Wirkungsgrad des Wärmeübertragers am größten. Dieses Optimum ist abhängig von vielen Parametern, wie beispielsweise der Lufttemperatur oder Parametern des Wärmeübertragers.

Zu berücksichtigen ist, dass ein fluides Energieträgermedium einen Verbraucher für gewöhnlich auf einem längeren Weg durchfließt und sich das Energieträgermedium über den Weg kontinuierlich abkühlt (oder anderenfalls erwärmt). Für einen realen Verbraucher ist es deshalb kaum möglich, die Temperatur des Energieträgermediums in dem gesamten Verbraucher auf einer optimalen Temperatur zu halten. Um dennoch möglichst optimalen Wirkungsgrad zu erreichen, kann ein (sub)optimaler Temperaturbereich bestimmt werden, der die optimale Temperatur umfasst. Es ist deshalb erfindungsgemäß, dass ein Regler durch Stellen der Pumpe eine Temperaturdifferenz des Energieträgermediums zwischen der Verbraucherverbundvorlaufleitung und der Verbraucherverbundrücklaufleitung regelt. Diese Temperaturdifferenz ist vorteilhaft diejenige, die insbesondere sinngemäß der zuvor genannten suboptimalen Temperaturdifferenz entspricht. Sodann kann es vorteilhaft sein, dass der Verbraucherverbund bzw. der Verbraucher mit einem annähernd optimalen Wirkungsgrad betrieben wird.

Es wird bevorzugt, dass der Regler die Pumpenregelgröße anhand einer einstellbaren Differenztemperatursollgröße (Pumpenreferenzgröße) regelt. Dazu kann der Regler die Pumpe in der Weise stellen, dass die Pumpenregelgröße der Pumpenreferenzgröße nachgeführt wird. Als Regler eignet sich beispielsweise ein Regler mit proportionalem, integralem und/oder differenzierendem Verhalten.

Ferner ist es bevorzugt, dass die Differenztemperatursollgröße einstellbar ist. In einer einfachen Ausführung kann die Differenztemperatursollgröße mittels eines Einstellrades, das vorzugsweise mit einem elektrischen Potentiometer verbunden ist, einstellbar sein, wobei das Potentiometer in elektrischer Leitungsverbindung mit dem Regler steht. In einer alternativen Ausgestaltung kann die Differenztemperatursollgröße beispielsweise durch ein Tastenfeld und/oder durch einen berührungsempfindlichen Bildschirm einstellbar sein. Ferner kann es vorgesehen sein, dass der Regler eine Telemetrieeinheit aufweist, die zum Senden und/oder Empfangen von Informationen ausgestaltet ist, sodass die Temperaturdifferenzsollgröße telemetrisch an den Regler übermittelbar ist und/oder die Differenztemperatursollgröße mittels telemetrisch empfangener Daten einstellbar ist. Mit anderen Worten kann der Regler einen Eingang und/oder Eingangsklemmen aufweisen, der und/oder die dazu geeignet sind, Daten zu empfangen, die die Differenztemperatursollgröße repräsentieren.

Für ein Einstellen der Differenztemperatursollgröße kann es vorteilhaft sein, wenn nur an den Verbraucher und/oder den Verbraucherverbund angepasste Differenztemperatursollgrößen einstellbar sind. Insbesondere für Wärmetauscher ist es besonders vorteilhaft, wenn der Pumpenreferenzgröße eine Temperatur aus dem Bereich von 0,5 bis 12 Kelvin, insbesondere aus dem Bereich von 1 bis 8 Kelvin, vorzugsweise von 1, 2, 3, 4, 5, 6, 7 oder 8 Kelvin zugewiesen wird. Denkbar sind auch kleinere Abstufungen, beispielsweise in 0,1 Kelvin oder 0,25 Kelvinschritten zwischen 0,1 beziehungsweise 0,25 und 12 Kelvin. Ist es beispielsweise bekannt, dass ein Wärmetauscher besonders wirksam betrieben werden kann, wenn eine Temperaturdifferenz des von dem Wärmetauscher durchflossenen Energieträgermediums zwischen der Vorlaufleitung und der Rücklaufleitung 6,5 Kelvin beträgt, so ist es dann besonders vorteilhaft, wenn auch die Differenztemperatursollgröße auf 6,5 Kelvin eingestellt ist und der Regler durch Stellen der Pumpe die Pumpenregelgröße auf 6,5 Kelvin regelt.

Je nach Einsatzgebiet und Art des Verbrauchers kann die Differenzternperatursollgröße auch eine dynamische Größe sein und/oder funktionell von verschiedenen Randbedingungen und/oder anderen äußeren und/oder konstruktiven Parametern abhängen. Es ist deshalb vorteilhaft, wenn das Verfahren zur Regelung, welches in einer Heizungsanlage ausgeführt wird, auch bei sich ändernden Umgebungsverhältnissen besonders wirksam ist. Das Verfahren ist insbesondere dann besonders wirksam, wenn der Verbraucher und/oder der Verbraucherverbund bei einem möglichst hohen Wirkungsgrad betrieben wird. Eine besonders vorteilhafte Ausgestaltung der Erfindung kennzeichnet sich deshalb dadurch, dass die Pumpenreferenzgröße aus einem Kennfeld (Pumpenkennfeld). das Pumpenreferenzgrößen, Wirkungsgrade, Vorlauftemperaturen, Rücklauftemperaturen und/oder Verbraucherumgebungstemperaturen zueinander tabelliert, ermittelt wird, sodass der zugehörige Wirkungsgrad möglichst hoch ausfällt. Ein Kennfeld, das mehrere Größen zueinander tabelliert, impliziert, dass dazu Werte der Bezugsgrößen zueinander tabelliert sind. Die Verbraucherumgebungstemperaturen aus dem Kennfeld können beispielsweise durch Temperaturen von minus 50°C bis plus 200°C, vorzugsweise in 0,1°C-Schritten, repräsentiert sein. Jede Größe kann durch die gleiche Anzahl von Werten repräsentiert sein. Für die zuvor genannte vorteilhafte Aufzählung haben also Pumpenreferenzgröße, Wirkungsgrade, Vorlauftemperaturen und Rücklauftemperaturen jeweils wie auch die Verbraucherumgebungstemperaturen, die sie jeweils repräsentieren. Sollte eine Auflösung eines Kennfeldes nicht reichen, so ist es ebenfalls möglich, dass Zwischengrößen aus den Größen des Kennfeldes interpoliert werden. Das Kennfeld bildet also vorzugsweise ab, wie charakteristische Größen eines Verbrauchers und/oder eines Verbraucherzweiges insbesondere funktionell miteinander verknüpft sind.

Die Ermittlung der Pumpenreferenzgröße aus dem Kennfeld erfolgt vorzugsweise durch Verringerung der Freiheitsgrade des Kennfeldes. So kann beispielsweise das Kennfeld um einen Freiheitsgrad verringert werden, in dem einer Größe des Kennfeldes, beispielsweise der Verbraucherumgebungstemperatur, ein fester Wert zugeordnet ist. Eine Möglichkeit zur Ermittlung der Pumpenreferenzgröße aus dem Kennfeld ist dadurch gekennzeichnet, dass alle Größen des Kennfeldes bis auf die Pumpenreferenzgröße und der Wirkungsgrad durch einen bestimmten und/oder gemessenen Wert festgelegt sind und die Pumpenreferenzgröße dann in der Weise ausgewählt wird, dass der zugehörige Wirkungsgrad möglichst hoch ausfällt.

Ferner ist es bevorzugt, dass die Ermittlung der Pumpenreferenzgröße folgende Schritte umfasst. Der erste Schritt kann ein Messen der Verbraucherverbundvorlauftemperatur und/oder Verbraucherverbundrücklauftemperatur und/oder Verbraucherumgebungstemperatur sein. Das Messen kann mit bekannten Messvorrichtungen aus dem Stand der Technik erfolgen. Die Messelemente stehen vorzugsweise in Leitungsverblndung mit einer Recheneinheit, insbesondere einer Recheneinheit der Regelung. Ein nachfolgender zweiter Schritt kann ein Ermitteln einer zweidimensionalen Kennlinie, die Pumpenreferenzgrößenwirkungsgrade zuordnet, aus dem Pumpenkennfeld umfassen, wobei die Verbraucherverbundvorlauftemperatur und/oder Verbraucherverbundrücklauftemperatur und/oder Verbraucherumgebungstemperatur mit ihren gemessenen Werten festgelegt werden. Mathematisch spannt das Kennfeld einen, wenn auch begrenzten, mehrdimensionalen Raum auf. Je nach Anzahl der Größen des Kennfelds kann dieser Raum auch mehrere, beispielsweise 4, 5, 6 oder sogar noch mehr, Dimensionen haben. Sind nun aber mehrere dieser Größen durch ihre gemessenen Werte festgelegt, kann die Dimension des Kennfelds jeweils um eine Dimension mit jedem gemessenen Wert reduzieren werden. Sind alle bis auf zwei Größen durch ihre gemessenen Werte festgelegt, so handelt es sich im mathematischen Sinne um einen zweidimensionalen Raum, der für den hier bevorzugten Fall durch die Pumpenreferenzgröße und den Wirkungsgrad aufgespannt ist. Funktionell können die Werte der Pumpenreferenzgröße und des Wirkungsgrades durch eine (zweidimensionale) Kennlinie miteinander verknüpft sein. In diesem Sinne ist bevorzugt jedem Wert der Pumpenreferenzgröße ein Wert des Wirkungsgrades zugeordnet.

Der dritte bevorzugte Schritt ist ein Ermitteln des maximalen Wirkungsgrades aus der (zweidimensionalen) Kennlinie und der zugehörigen Pumpenreferenzgröße. Bereits zuvor wurde erläutert, dass der Wirkungsgrad im mathematischen Sinne eine Funktion der Pumpenreferenzgröße sein kann. Aus dem Stand der Technik bekannt sind Verfahren zur Ermittlung eines Maximums. Insbesondere können dies numerische Optimierungsverfahren, bevorzugt nach einer Gradientenmethode, sein. Ist der maximale Wirkungsgrad ermittelt, so kann bevorzugt auch der dazu entsprechende Wert der Pumpenreferenzgröße aus der Kennlinie ermittelt werden.

Das Ermitteln der Kennlinie und/oder des Wirkungsgrades und/oder der zugehörigen Pumpenreferenzgröße kann mittels einer Recheneinheit erfolgen. Die Recheneinheit kann eine Recheneinheit der Heizungsanlage und/oder des Reglers sein. Ferner weist die Recheneinheit bevorzugt einen Speicher auf. Der Speicher kann dazu geeignet sein, die Kennlinie. und/oder das Kennfeld zu speichern.

Es ist ferner bevorzugt, dass das Verfahren zur Regelung auch für einen Verbraucherverbund mit mehreren Verbrauchern besonders wirksam ist. Um diesen Vorteil zu ermöglichen, kann die Erfindung dadurch gekennzeichnet sein, dass bei mehreren Verbrauchern eines Verbraucherverbundes das Pumpenkennfeld aus einem gemittelten Kennfeld der Verbraucher besteht. Die Kennfelder der Verbraucher können dazu einander gewichtet überlagert sein. Bevorzugt kann das gemittelte Kennfeld der Verbraucher auch aus den verschiedenen Verbraucherkennfeldern in der Weise einander gewichtet überlagert sein, dass jedes Kennfeld eines Verbrauchers mit dessen maximaler Leistung, insbesondere Nennleistung, gewichtet ist, und die so gewichteten Kennfelder einander überlagert (entsprechend addiert) sind, und dieses resultierende Kennfeld mit dem Kehrwert der Summe aller Verbraucher(nenn)leistungen gewichtet ist. Mit anderen Worten kann das Pumpenkennfeld aus einem gemittelten Kennfeld der Verbraucher bestehen, das vorzugsweise aus dem Quotient der Summe der Produkte der Kennfelder des jeweiligen Verbrauchers mit dessen insbesondere maximaler Verbraucher(nenn)leistung (oder mit einem Wert eines jeweiligen charakteristischen Verbraucherparameters) zu der Summe der insbesondere maximalen Verbraucher(nenn)leistungen (oder der Summer der Werte der jeweiligen charakteristischen Verbraucherparameter) aller Verbraucher eines Verbraucherverbundes besteht. Die maximale Verbrauchernennleistung kann diejenige Leistung sein, die von einem fluiden Energieträgermedium an den Verbraucher übertragbar ist. Anstelle der maximalen Verbrauchernennleistung kann auch eine andere Leistung oder ein anderer charakteristischer Wert des Verbrauchers zur Ermittlung des Kennfeldes berücksichtigt werden. Hierfür eignet sich beispielsweise auch

Regler können sowohl Analog- als auch Digitalregler sein. Insbesondere für Digitalregler kann es sinnvoll sein, dass die Ermittlung der Pumpenreferenzgröße wiederholt durchgeführt wird. Sind auch alle anderen Größen, insbesondere die Verbraucherverbundvorlauftemperatur und/oder die Verbraucherverbundrücklauftemperatur und/oder die Verbraucherumgebungstemperatur, quantisierte Größen mit einer festen Abtastzeit, so könnte die Wiederholung mit derselben Abtastzeit oder auch mit einer vielfachen der Abtastzeit, beispielsweise mit der 2-, 3-, 4-, 5- oder n-fachen Abtastzeit, erfolgen, wobei n eine natürliche Zahl ist. Vorzugsweise ist die Ermittlung der Referenzgröße mit der Ermittlung der Messgrößen synchronisiert.

In einer besonders bevorzugten Ausgestaltung ist das Verfahren zur Regelung dadurch gekennzeichnet, dass der Regler aus der Differenz aus Pumpenreferenzgröße und Pumpenregelgröße (Pumpenregelfehler) eine Pumpenstellgröße ermittelt, wobei die Pumpenstellgröße eine Steuergröße der Pumpe ist. Ist die Pumpenreferenzgröße beispielsweise 6,5 Kelvin und die Pumpenregelgröße 2 Kelvin, so ist der Pumpenregelfehler 4,5 Kelvin. Der Regler ermittelt aus dem Pumpenregelfehler die Pumpenstellgröße. Hat der Regler beispielsweise ein proportionales Übertragungsverhalten von Pumpenregelfehler zu Pumpenstellgröße, so kann der Regler aus dem zuvor genannten Pumpenregelfehler von 4,5 Kelvin eine Pumpenstellgröße von beispielsweise 180 Volt ermitteln. Die 180 Volt der Pumpenstellgröße könnten somit auch eine Steuergröße der Pumpe sein, nämlich die Spannungsversorgung der Pumpe.

Für eine weitere bevorzugte Ausgestaltung kann der Regler ein proportionales integrales und/oder differenzierendes Übertragungsverhalten von dem Pumpenregelfehler zu der Pumpenstellgröße aufweisen. Solche Regler werden bekanntlich als P-, I- und/oder D-Regler oder mit einer Kombination der zuvor genannten Buchstaben, beispielsweise PI-, PD-Regler, bezeichnet. Möglich sind jedoch auch andere Arten von Reglern. Insbesondere denkbar ist der Einsatz von Reglern mit linearer Rückführung, wie beispielsweise die Zustands- und/oder Ausgangsrückführung, und/oder nicht lineare Regler, wie beispielsweise adaptive Regler oder Fuzzy-Regler.

Es kann ferner ein Stellglied vorgesehen sein, dass die Pumpenstellgröße zu einer Steuergröße transformiert. Als Steuergröße der Pumpe und/oder als Pumpenstellgröße eignet sich insbesondere die Drehzahl, die Leistung, die Fördermenge, der Druck und/oder der Rotorflügelwinkel der Pumpe oder eine zumindest einer der Größen zumindest im Wesentlichen proportionale und/oder von mindestens einer der Größen zumindest im Wesentlichen funktional abhängige Größe. Eine weitere vorteilhafte Ausgestaltung der Erfindung ist dadurch gekennzeichnet, dass die Steuergröße der Pumpe und/oder die Pumpenstellgröße die Spannung, der Strom, die Frequenz, die Pulsfrequenz, die Pulsweite und/oder eine sonstige Größe eines elektrischen Motors der Pumpe oder eine zumindest einer der Größen im Wesentlichen proportionale und/oder von mindestens einer der Größen im Wesentlichen funktional abhängige Größe ist. Die zuvor genannten frequenzabhängigen Größen kommen insbesondere dann in Betracht, wenn der Verbraucher und/oder der Heizkreislauf ein elektromotorisch einstellbares Mischventil aufweist.

Vorteilhaft ist das Mischventil ein Dreiwegemischventil. In einer bevorzugten Ausgestaltung ist das Mischventil in der Verbraucherverbundvorlaufleitung angeordnet. Ferner kann der Heizkreislauf einen Mischerbypass aufweisen, der eine Rohrverbindung von der Verbraucherverbundrücklaufleitung zu dem Mischventil ist. Durch eine solche Anordnung können beispielsweise fluide Energieträgermedien im Mischventil vermischt werden, sodass durch Stellen des Mischventils bevorzugt eine Vorlauftemperatur der Verbraucherverbundvorlaufleitung durch den Regler geregelt werden kann. Mit dieser Anordnung ist es aber auch möglich, dass die Rücklauftemperatur der Verbraucherverbundrücklaufleitung durch das Stellen des Mischventils regelbar ist.

Insbesondere damit der Regler das Mischventil vorteilhaft stellen kann, ist das Verfahren zur Regelung vorzugsweise dadurch gekennzeichnet, dass der Regler die Mischventilregelgröße anhand einer voreinstellbaren Vor- oder Rücklauftemperatursollgröße (Mischventilreferenzgrößen) regelt. Für die Einstellbarkeit der Vor- oder Rücklauftemperatursollgröße gelten die gleichen Möglichkeiten, wie für die Einstellbarkeit der Differenztemperatursollgröße.

Eine weitere Ausgestaltung des Verfahrens ist dadurch gekennzeichnet, dass der Regler aus der Differenz aus der Mischventilreferenzgröße und der Mischventilregelgröße (Mischventilregelfehler) eine Mischventilsteuergröße ermittelt. Grundsätzlich ist es möglich, dass der Regler zur Regelung der Pumpenregelgröße und zur Regelung der Mischventilregelgröße die gleiche Struktur aufweist. Alternativ ist es jedoch auch möglich, dass der Regler für die zuvor genannten Regelgrößen eine unterschiedliche Struktur aufweist. So kann der Regler zur Regelung der Pumpenregelgröße beispielsweise ein proportionales Verhalten aufweisen und zur Regelung der Mischventilregelgröße ein integrales Verhalten aufweisen. Prinzipiell folgt die Ermittlung der Mischventilstellgröße analog zu der Ermittlung der Pumpenstellgröße aus dem Pumpenregelfehler. Ferner kann es bevorzugt sein, dass die Mischventilstellgröße eine Steuergröße des Mischventils ist, und diese vorzugsweise der Zustand und/oder die Position eines Fluidsteuerelements insbesondere eines Drehschiebers, eines Ventilkegels oder einer Ventilspindel des Mischventils ist.

Der der Erfindung zu Grunde liegende Gedanke führt ferner zu einer Vorrichtung zur Regelung in einer Heizungsanlage. Erfindungsgemäß ist deshalb eine Vorrichtung zur Regelung in einer Heizungsanlage, die eine Wärmequelle und einen Verbraucher in einem Heizkreislauf aufweist, der von einem fluiden Energieträgermedium durchflossen ist und einen Verbraucherverbund mit mindestens einem Verbraucher, einer Verbraucherverbundvorlaufleitung und einer Verbraucherverbundrücklaufleitung sowie einer Pumpe aufweist. Damit der Heizkreislauf von dem fluiden Energieträgermedium durchflossen werden kann, kann dieser beispielsweise Rohrleitungen, Ventile, Drosseln, Mischstellen oder andere übliche Bauelemente aufweisen, die dazu geeignet sind, einen Kreislauf für ein fluides Medium zu bilden. Der Verbraucher und der Verbraucherverbund wurden bereits zuvor erläutert. Ebenfalls wurden zuvor auch die Verbraucherverbundvorlaufleitung und die Verbraucherverbundrücklaufleitung sowie eine Pumpe eingeführt. Die Leitungen können beispielsweise Rohrleitungen aus Metall und/oder Kunststoff sein. Für die Pumpe kommen beispielsweise geräuscharme Kreiselpumpen in Betracht.

Erfindungsgemäß zeichnet sich die Vorrichtung auch dadurch aus, dass Signalleitungsverbindungen zwischen einem Vorlauf-Temperatursensor, einem Rücklauf-Temperatursensor, einem Regler und einem Stelleingang der Pumpe ausgebildet sind. Signalleitungsverbindungen können insbesondere Direkt- und/oder Indirektverbindungen sein. Eine bevorzugte Direktverbindung zwischen dem Regler und einem Eingang der Pumpe kann dadurch charakterisiert sein, dass die Verbindung im Wesentlichen unterbrechungsfrei ist und/oder. nicht von einer Signalverarbeitungseinheit unterbrochen ist. Ferner kann unter einer Signalleitungsverbindung auch eine Funk- und/oder telemetrische Signalleitungsverbindung verstanden werden. Der Regler, die Sensoren und/oder die Pumpe können dazu Sender und Empfänger aufweisen, die dazu geeignet sind, Signale telemetrisch und/oder mittels elektromagnetischer Wellen zu senden bzw. zu,empfangen.

Alternativ kann auch eine indirekte Signalleitungsverbindung bevorzugt sein, die sich vorzugsweise dadurch auszeichnet, dass sie von einer Signaldatenverarbeitungseinheit unterbrochen ist. Diese Datenverarbeitungseinheit kann vorzugsweise dazu geeignet sein, die Signalstärke zu verstärken.

Eine wesentliche Aufgabe der Temperatursensoren ist es, die Temperatur des fluiden Trägermediums in der Vorlaufleitung bzw. in der Rücklaufleitung zu messen und vorzugsweise diese gemessenen Informationen in geeignete Signale umzuwandeln. Je nach Messmethode, Messintervall und/oder Messhäufigkeit können die Signale der Sensoren durch Signalleitungsverbindungen an den Regler übermittelt werden. Der Regler hat dazu vorzugsweise eine Signalempfangseinheit. Ferner hat der Regler vorzugsweise eine SIgnaldatenverarbeitungseinheit und/oder eine Recheneinheit, um aus den Eingangsgrößen eine Stellgröße zu ermitteln. Die ermittelten Stellsignale werden bevorzugt durch eine Signalleitungsverbindung an eine Pumpe übermittelt. Ist der Eingang der Pumpe der Stelleingang der Pumpe, so kann der Regler den Zustand der Pumpe verändern. Es ist insofern bevorzugt, dass sich der Regler in einem geschlossenen Regelkreis mit den Sensoren, den Signalleitungsverbindungen und der Pumpe befindet.

Die erfindungsgemäße Vorrichtung ist bevorzugt auch dadurch gekennzeichnet, dass eine Signalleitungsverbindung zwischen dem Regler und einem Stelleingang eines Mischventils ausgebildet ist. Für eine Signalleitungsverbindung zwischen dem Regler und einem Stelleingang des Mischventils gelten analog die gleichen bevorzugten Ausgestaltungsmöglichkeiten wie für die Signalleitungsverbindungen zwischen dem Regler und einem Stelleingang der Pumpe. Insbesondere kann die Signalverbindungsleitung eine direkte und/oder eine indirekte und/oder telemetrische Verbindung sein.

Es ist weiter bevorzugt, dass der Stelleingang des Mischventils mit einer Stelleinheit des Mischventlls verbunden ist Die Stelleinheit des Mischventils kann in der Weise ausgestaltet sein, dass sie den Zustand und/oder die Position eines Fluidsteuerelements, insbesondere eines Drehschiebers, eines Ventilkegels oder einer Ventilspindel, verändern und/oder bestimmen kann.

Eine weitere bevorzugte Ausgestaltung der Vorrichtung zeichnet sich dadurch aus, dass der Regler ein Kennfeld und eine Recheneinheit zur Ermittlung einer Referenzgröße aufweist. Der Regler kann dazu ferner eine Speichereinheit aufweisen, die das Kennfeld speichert. Weiter können Recheneinheit und Kennfeld und/oder Speicher durch eine Signalleitungsverbindung miteinander verbunden sein, sodass die Recheneinheit auf den Speicher bzw. auf dessen Inhalt, insbesondere das Kennfeld, Zugriff hat. Ferner ist es bevorzugt, dass die Recheneinheit dazu ausgestaltet und/oder geeignet ist, einen Vergleich zwischen den Referenzgrößen und den entsprechenden Messgrößen auszuführen und vorzugsweise einen Regelfehler zu ermitteln.

Für eine weitere bevorzugte Ausgestaltungsvariante kann es vorteilhaft sein, dass die Pumpe und das Mischventil eine Einheit bilden, insbesondere dass das Mischventil in die Pumpe integriert ist. Bevorzugt können also die Pumpe und das Mischventil ein Modul bilden. Sie können auch bevorzugt ein gemeinsames Gehäuse aufweisen. Alternativ ist es ebenfalls möglich, dass die Pumpe und/oder das Mischventil kraftund/oder formschlüssig miteinander verbunden sind.

**<u>Bezugszeichenliste:</u>**

| Bezugszeichen | Bedeutung |
|---|---|
| $P_{vor}$ | Vorlaufleistung |
| $P_{rück}$ | Rücklaufleistung |
| $P_{VB}$ | Verbraucherleistung, Verbraucherverbundleistung |
| $\Delta T$ | Differenztemperatur |
| $\Delta T_{opt}$ | optimale Differenztemperatur |
| $\mu$ | Wirkungsverhältnis |
| $\mu_{opt}$ | optimales Wirkungsverhältnis |
| $\mu_{max}$ | maximales Wirkungsverhältnis |
| $T_{vor}$ | Verbraucherverbundvorlauftemperatur |
| $P_{vor}$ | Verbraucherverbundvorlaufdruck |
| $V_{vor}$ | Verbrauchmerbundvorlauftvolumenstrom |
| $T_{rück}$ | Verbraucherverbundrücklauftemperatur |
| $P_{rück}$ | Verbraucherverbundrücklauftdruck |
| $V_{rück}$ | Verbraucherverbundrücklaufvolumenstrom |
| $T_{lin}$ | erste Verbrauchervorlauftemperatur |
| $P_{lin}$ | erster Verbrauchervorlaufdruck |
| $V_{lin}$ | erster Verbrauchervorlaufvolumenstrom |
| $T_{1out}$ | erste Verbrduuhcrrücklauftemperatur |
| $P_{1out}$ | erster Verbraucherrücklaufdruck |
| $V_{1out}$ | crstcr Verbrauchcrrücklaufvolumcnstrom |
| $T_{2in}$ | zweite Verbrauchervorlauftemperatur |
| $P_{2in}$ | zweiter Verbrauchervorlaufdruck |
| $v_{2in}$ | zweiter Verbrauchervorlaufvolumenstrom |
| $T_{2out}$ | zweite Verbraucherrücklauftemperatur |
| $P_{2out}$ | zweiter Verbraucherrücklaufdruck |
| $V_{2out}$ | zweiter Verbraucherrücklaufvolumenstrom |

(fortgesetzt)

| Bezugzeichen | Bedeutung |
|---|---|
| r | Referenzgröße |
| u | Stellgröße, Pumpenstellgröße |
| y | Ausgangsgröße |
| e | Pumpenregelfehler |
| $T_{um}$ | Verbraucherumgebungstemperatur |
| $T_{urn,ref}$ | Referenzverbraucherumgebungstemperatur |
| 1 | Heizkreislauf |
| 2 | Wärmequelle |
| 4 | Mischergruppe |
| 6 | Verbraucherverbund |
| 8 | Mischervorlauf |
| 10 | Mischerrücklauf |
| 12 | Mischventil |
| 14 | Pumpe |
| 16 | Verteiler |
| 18 | Verbraucherverbundvorlaufleitung |
| 20 | Verbraucherverbundrücklaufleitung |
| 22 | Mischerbypass |
| 24 | Pumpenzulaufleitung |
| 26 | Mischventilstellelement |
| 28 | Pumpenstellelement |
| 30 | erster Verbraucher |
| 32 | zweiter Verbraucher |
| 34 | erste Verbrauchervorlaufleitung |
| 36 | zweite Verbrauchervorlaufleitung |
| 38 | Verbraucherverteiler |
| 40 | erstes Drosselventil |
| 42 | zweites Drosselventil |
| 44 | erstes Drosselstellelement |
| 46 | zweites Drosselstellelement |
| 48 | erste Verbraucherrücklaufleitung |
| 50 | zweite Verbraucherrücklaufleitung |
| 52 | Verbrauchersammler |
| 54 | Verbraucherverbundvorlaufsensor |
| 56 | Verbraucherverbundrücklaufsensor |
| 58 | erster Verbrauchervorlaufsensor |
| 60 | erster Verbraucherrücklaufsensor |
| 62 | zweiter Verbrauchervorlaufsensor |
| 64 | zweiter Verbrauchcrrücklaufsensor |
| 66 | Mischerpumpe |
| 68 | 4-Wege-Mischventil |
| 70 | Regelkreis |
| 72 | Regler |
| 74 | Strecke |
| 76 | Kennfeld |
| 78 | Kennlinie |

**Ausführunasbeispiele:**

Weitere Einzelheiten, Vorteile und Merkmale der Erfindung gehen aus der nachfolgenden Beschreibung der Figuren hervor. Dabei zeigen:

**Figur 1** eine graphische Darstellung eines Wirkungsverhältnisses für die Differenztemperatur zwischen Vor- und Rücklaufleitung eines Verbraucherverbundes,

**Figur 2** eine erste schematische Darstellung eines Heizkreislaufes mit einer Wärmequelle, einer Mischergruppe und einem Verbraucherverbund,

**Figur 3** eine zweite schematische Darstellung eines Heizkreislaufes mit einer Wärmequelle, einer Mischergruppe und einem Verbraucherverbund,

**Figur 4** eine dritte schematische Darstellung eines Heizkreislaufes mit einer Wärmequelle, einer Mischergruppe und Verbraucherverbund,

**Figur 5** eine erste schematische Darstellung eines Regelkreises für die Heizungsanlage,

**Figur 6** eine zweite schematische Darstellung eines Regelkreises für die Heizungsanlage,

**Figur 7** eine graphische Darstellung eines Kennfeldes für das Verfahren und/oder die Vorrichtung zur Regelung und

**Figur 8** eine graphische Darstellung einer Kennlinie für das Verfahren und/oder die Vorrichtung zur Regelung.

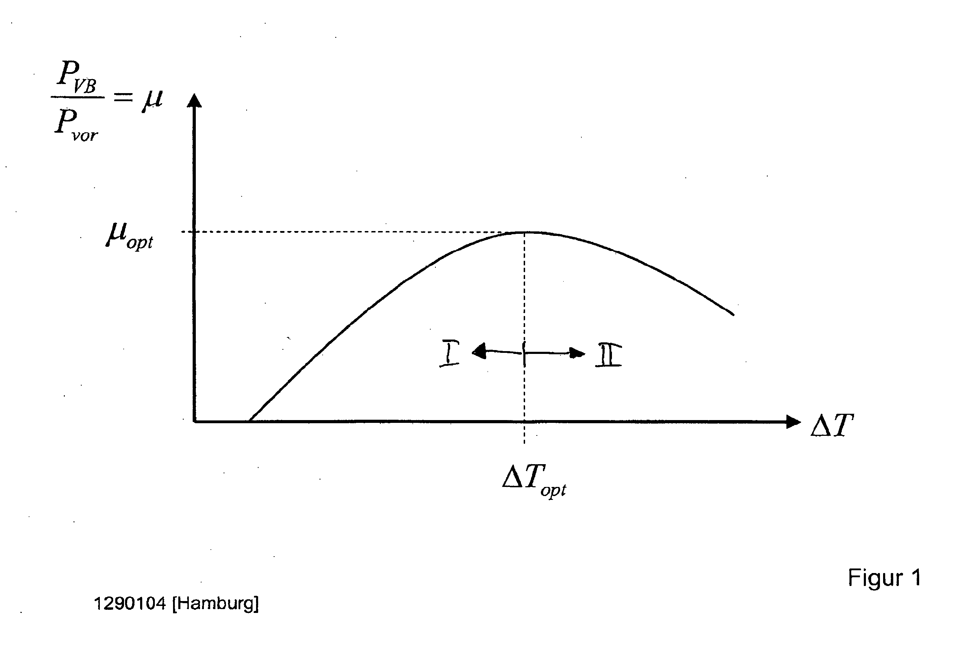

In der **Figur 1** graphisch dargestellt ist ein beispielhafter Verlauf eines Wirkungsverhältnisses eines Verbrauchers oder eines Verbraucherverbundes. Auf der Ordinate aufgetragen ist das Verhältnis der Leistungen $P_{VB}/P_{vor}$ in Abhängigkeit von der Differenztemperatur $\Delta T$ eines Energieträgermediums zwischen der Verbraucherverbundvorlaufleitung und der Verbraucherverbundrücklaufleitung. Der Verlauf des Wirkungsverhältnisses ist konvex. Außerdem ist das Wirkungsverhältnis bei einer Differenztemperatur von $\Delta T_{opt}$ maximal und mit $\mu_{opt}$ gekennzeichnet. Bei einer niedrigeren oder höheren Differenztemperatur als die optimale Differenztemperatur $\Delta T_{opt}$ ist das WirkungsVerhältnis kleiner als $\mu_{opt}$.
Der Wirkungsgrad $\mu$ ist das Verhältnis der Verbraucherleistung $P_{VB}$ zu der Vorlaufleistung $P_{vor}$. Unter der Verbraucherleistung ist diejenige Leistung eines Verbrauchers oder eines Verbraucherverbundes zu verstehen, die von dem Verbraucher bzw. von dem Verbraucherverbund aufgenommen und vorzugsweise an ein anderes Medium übertragen wird, beispielsweise an die Luft eines zu erwärmenden Raums. Unter der Vorlaufleistung kann diejenige Leistung verstanden werden, die mittels des fluiden Energieträgermediums durch den Verbrauchervorlauf zu den Verbrauchern und/oder durch den Verbraucherverbundvorlauf zu dem Verbraucherverbund übertragen wird. Unter der Differenztemperatur $\Delta T$ kann die Differenztemperatur des fluiden Energieträgermediums zwischen einer Verbrauchervorlaufleitung und einer Verbraucherrücklaufleitung oder zwischen der Verbraucherverbundvorlaufleitung und der Verbraucherverbundrücklaufleitung verstanden werden.
Für die weitere Erläuterung der graphischen Darstellung aus Figur 1 stellt der Verlauf des Wirkungsgrades den Verlauf eines Wirkungsgrades eines Verbraucherverbundes dar. Grundsätzlich sind die im Folgenden erläuterten Einzelheiten, Vorteile und Details auch einem Verbraucher zuzuschreiben. Der Verbraucherverbund steht deshalb im übertragenen Sinne auch für einen einzelnen Verbraucher.
Der Bereich I des Wirkungsverhältnisses verdeutlicht, dass eine geringere Differenztemperatur AT als die optimale Differenztemperatur $\Delta T_{opt}$ auch einen geringeren Wirkungsgrad als den optimalen Wirkungsgrad $\mu_{opt}$ zur Folge hat. Dieses Verhältnis sei an einem praktischen Beispiel erläutert: Mehrere Verbraucher eines Verbraucherverbundes sind in einem Raum installiert. Für den Fall, dass die Temperatur des fluiden Energleträgermediums der Temperatur des Raumes entspricht, findet auch keine Leistungsübertragung von dem fluiden Energieträgermedium an den Raum statt. Die Verbraucherleistung ist also Null, sodass auch der Wirkungsgrad Null ist. Die Kennlinie des Wirkungsgrades gibt diesen Fall beim Schnittpunkt mit der Abszisse wieder. Wie in Figur 1 gezeigt, ist die Differenztemperatur $\Delta T$ von Null verschieden, denn für diesen beispielhaften Fall soll das fluide Energieträgermedium aufgrund der realen, nicht idealen Wärmedämmung der Verbraucherverbundrücklaufleitung abgekühlt sein, sodass die DIfferenztemperatur des Energieträgermediums zwischen der Verbraucherverbundvorlaufleitung und der Verbraucherverbundrücklaufleitung größer als Null ist. Es tritt also eine Verlustleistung durch die nicht ideale Wärmedämmung der Rücklaufleitung auf. Eine weitere mechanische Verlustleistung entsteht dadurch, dass die Pumpe das fluide Energieträgermedium durch den Verbraucherverbund pumpt. Mit steigender Differenztemperatur steigt auch das Wirkungsgradverhältnis, denn, ist die Temperatur des fluiden Energieträgermediums vorzugsweise deutlich höher als die Temperatur des zu erwärmenden Raumes, wird auch Energie an den Verbraucher abgegeben bzw. an den Raum übertragen. Entsprechend der abgegebenen bzw. übertragenen Energie sinkt auch die Temperatur des fluiden Energieträgermediums in der Verbraucherverbundrücklaufleitung, was wiederum zu einer höheren Differenztemperatur führt. Dieser Zusammenhang ist in der Kennlinie des Wirkungsgrades im Bereich I dargestellt, in dem der Wirkungsgrad mit steigender Differenztemperatur steigt.

Steigt die Differenztemperatur ΔT, insbesondere deutlich, über die optimale Differenztemperatur $\Delta T_{opt}$ hinaus, so ist der Wirkungsgrad geringer als der optimale Wirkungsgrad, wie es auch in dem Bereich II der Figur 1 dargestellt ist In diesem Fall wird dem Verbraucherverbund eine höhere Leistung zugeführt. So steigt zwar auch die Verbraucherleistung, jedoch steigt sie für einen realen Verbraucher nicht in dem proportionalen Verhältnis zu der Vorlaufleistung. So hat ein realer Verbraucher bzw. ein realer Verbraucherverbund nur eine begrenzte Austauschfläche, die den Kontakt zu dem zu erwärmenden Medium herstellen kann. Mit anderen Worten bedeutet dies, dass die Vorlaufleistung nur begrenzt zu einer Verbraucherleistung führt.

Für jeden Verbraucherverbund und/oder für jeden Verbraucher gibt es eine optimale Differenztemperatur mit einem zugehörigen optimalen Wirkungsgrad. Für Differenztemperaturen, die deutlich oberhalb oder deutlich unterhalb der optimalen Differenztemperatur sind, ist der jeweils zugehörige Wirkungsgrad kleiner, insbesondere deutlich kleiner als der optimale Wirkungsgrad. Um einen möglichst hohen Wirkungsgrad für den Verbraucher oder einen Verbraucherverbund zu erreichen, regelt der Regler durch Stellen der Pumpe die Temperaturdifferenz des Energieträgermediums zwischen der Verbraucherverbundvorlaufleitung und der Verbraucherverbundrücklaufleitung. Sollte der Verbraucherverbund genau einen Verbraucher aufweisen, so regelt der Regler eine Temperaturdifferenz des Energieträgermediums zwischen der Verbrauchervorlaufleitung und der Verbraucherrücklaufleitung.

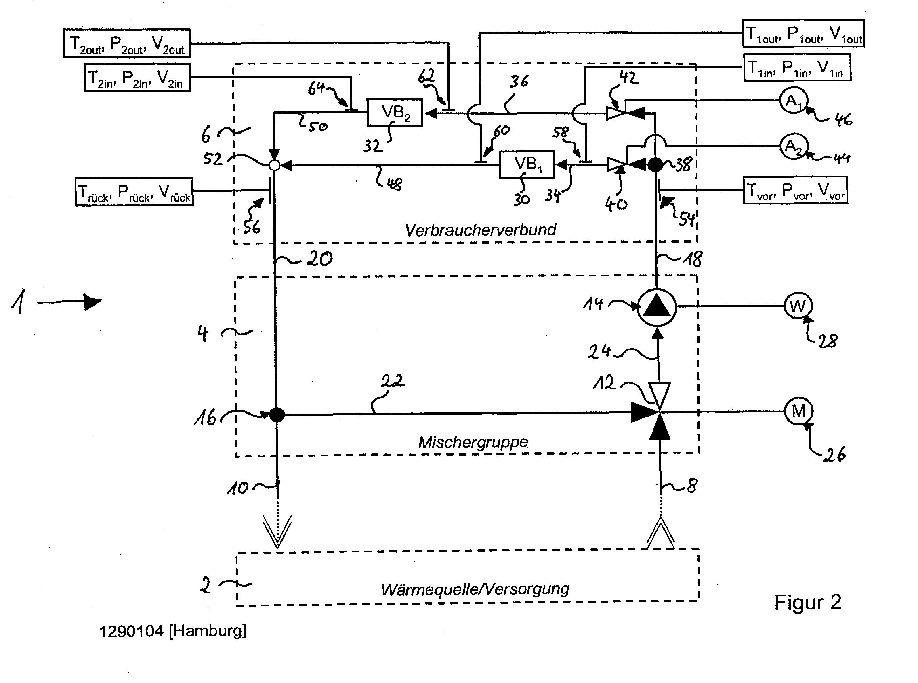

In **Figur 2** ist eine schematische Darstellung eines Heizkreislaufes **1** mit einer Wärmequelle **2**, einer Mischergruppe **4** und einem Verbraucherverbund **6** gezeigt. Die Wärmequelle **2** ist abstrakt wiedergegeben. Sie kann beispielsweise ein Wärmetauscher oder ein Boiler sein. Die Wärmequelle **2** und die Mlschergruppe **4** sind durch einen Vorlauf **8** von der Wärmequelle **2** zu der Mischergruppe **4** (Mischervorlauf) und durch einen Rücklauf 10 von der Mischergruppe **4** zu der Wärmequelle **2** (Mischerrücklauf) miteinander verbunden. Der Mischervorlauf **8** und/oder der Mischerrücklauf 10 kann eine Rohrleitung, ein Rohrleitungssystem oder ein ähnlich geartetes Bauteil oder eine ähnlich geartete Baugruppe sein.

Die Mischergruppe **4** weist ein Mischventil **12**, eine Pumpe **14** und einen Verteiler **16** auf. Die Mischergruppe **4** und der Verbraucherverbund **8** sind durch die Verbraucherverbundvorlaufleitung **18** und durch die Verbraucherverbundrücklaufleitung **20** miteinander verbunden. Durch die Verbraucherverbundvorlaufleitung **18** kann das fluide Energieträgermedium von der Mischergruppe **4** zu dem Verbraucherverbund **6** fließen. Vom Verbraucherverbund **6** zu der Mischergruppe **4** kann das fluide Energieträgermedium durch die Verbraucherverbundrücklaufleitung **20** fließen. Der Verteiler **16** verbindet die Verbraucherverbundrücklaufleitung **20** mit der Mischerrücklaufleitung 10. Des Weiteren Ist der Verteiler **16** mittels eines Mischerbypasses **22** mit einem Eingang des Mischventils **12** verbunden. Mit einem zweiten Eingang des Mischventils **12** ist die Mischervorlaufleitung **8** verbunden. Den Ausgang des Mischerventils **12** verbindet eine Pumpenzulaufleitung **24** mit dem Eingang der Pumpe **14**. Der Ausgang der Pumpe **14** ist mit der Verbraucherverbundvorlaufleitung **18** verbunden. Fluide Energieträgermedien, kommend aus der Wärmequelle durch die Mischervorlaufleitung **8** oder kommend von dem Verbraucherverbund durch die Verbraucherverbundrücklaufleitung **20**, den Verteiler **16** und den Mischerbypass **22** werden durch das Mischerventil vermischt, und treffen, geleitet durch die Pumpenzulaufleitung **24**, auf die Pumpe **14**. Je nach Zustand des Mischventils **12** mischt dieses die fluiden Energieträgermedien aus der Mischervorlaufleitung und dem Mischerbypass. Durch Stellen des Mischventils **12** kann das Mischungsverhältnis der fluiden Energieträgermedien aus den zuvor genannten Leitungen bestimmt werden. Der Zustand des Mischventils **12** kann beispielsweise die Position eines Fluidsteuerelements, insbesondere eines Drehschiebers in Form eines Ventilkegels oder einer Ventilspindel, sein. So kann der Zustand des Mischventils **12** durch ein Mischventilstellelement **26**, insbesondere ein Stellmotor oder Servomotor, verstellbar und/oder veränderbar sein. Die Pumpe **14** pumpt fluides Energieträgermedium aus der Pumpenzulaufleitung **24** in die Verbraucherverbundvorlaufleitung **18**. Durch ein Pumpenstellelement **28** können die Zustandsgrößen und/oder Steuergrößen der Pumpe **14** verstellbar und/oder veränderbar sein. Diese Größen sind auch die Stellgrößen der Pumpe, insbesondere die Drehzahl, die Leistung, die Fördermenge, der Druck und/oder ein Rotorflügelwinkel der Pumpe, oder eine zumindest zu einer dieser Größen im Wesentlichen proportionale und/oder von mindestens einer der Größen im Wesentlichen funktional abhängige Größe. Eine Pumpenstellgröße kann auch die Spannung, der Strom, die Frequenz, die Pulsfrequenz, die Pulsweite und/oder eine sonstige Größe eines elektrischen Motors der Pumpe, oder eine zumindest zu einer der Größen im Wesentlichen proportionale und/oder von mindestens einer der Größen im Wesentlichen funktional abhängige Größe sein.

Neben der Verbraucherverbundvorlaufleitung **18** und der Verbraucherverbundrücklaufleitung **20** weist der Verbraucherverbund **6** einen ersten Verbraucher **30** und einen zweiten Verbraucher **32** auf. Der erste Verbraucher **30** ist durch eine erste Verbrauchervorlaufleitung **34** und der zweite Verbraucher **32** durch eine zweite Verbrauchervorlaufleitung **36** mit dem Verbraucherverteiler **38** verbunden. Der Verbraucherverteiler **38** ist wiederum durch die Verbraucherverbundvorlaufleitung **18** mit der Pumpe **14** verbunden. Die Pumpe **14** kann also das fluide Energieträgermedium durch die Verbraucherverbundvorlaufleitung **18** zu dem Verbraucherverteiler **38** pumpen, von dem das fluide Energieträgermedium jeweils anteilig durch die erste Verbrauchervorlaufleitung **34** zu dem ersten Verbraucher **30** und zu einem anderen Teil durch die zweite Verbrauchervorlaufleitung **36** zu dem zweiten Verbraucher **32** fließen kann. Unterbrochen ist die erste Verbrauchervorlaufleitung **34** von einem ersten Drosselventil **40** und die zweite Verbrauchervorlaufleitung **36** durch ein zweites Drosselventil **42**. Der Zustand des ersten Drosselventils **40** kann durch ein erstes Drosselstellelement **44** verändert werden. Der Zustand des zweiten Drosselventils **42** kann durch ein zweites Drosselstellelement **46** bestimmt werden. Der Zustand eines Drosselventils kann insbesondere der Durchlassquerschnitt des Ventils sein. Die Drosselventile beeinflussen den Volumenstrom in der jeweiligen Verbrauchervorlaufleitung. Da das erste und zweite Drosselventil **40** bzw. **42** unabhängig voneinander gestellt werden können, beeinflussen die Drosselventil ebenfalls den Volumenstrom in der Verbraucherverbundvorlaufleitung **18**.

Der Ausgang des ersten Verbrauchers **30** ist mit der ersten Verbraucherrückauleitung **48** verbunden. Analog ist der Ausgang des zweiten Verbrauchers **32** mit der zweiten Verbraucherrücklaufleitung **50** verbunden. Ferner sind die erste und zweite Verbraucherrücklaufleitung **48** bzw. **50** mit dem Verbrauchersammler **52** verbunden. In den Verbrauchersammler **52** fließen die fluiden Energiemedien der ersten und zweiten Verbraucherrücklaufleitung **48** und **50** ein. Der Ausgang des Verbrauchersammlers **52** ist mit der Verbraucherverbundrücklaufleitung **20** verbunden. Die im Verbrauchersammler **52** zusammentreffenden fluiden Energieträgermedien fließen somit durch den Verbraucherverbundrücklauf **20** zu dem Verteiler **16**. Vom Verteiler **16** fließt ein Teil des fluiden Energieträgermediums in den Mischerbypass **22** und der andere Teil in den Mischerrücklauf **10**. Da der Mischerrücklauf **10** mit der Wärmequelle **2** verbunden ist, fließt somit auch ein Teil des fluiden Energieträgermediums zurück zur Wärmequelle **2**.

Im Folgenden werden nun mehrere Sensoren eingeführt. In ihrer Bauart und Form kann jeder dieser Sensoren in der Weise ausgestaltet sein, dass der Sensor mehrere Größen messen kann, Dieses sind insbesondere eine Temperatur, ein Druck und/oder ein Volumenstrom. Auch wenn es nicht für jeden der folgenden Sensoren explizit ausgeführt ist, können diese Sensoren auch separat, insbesondere für jede Messgröße, voneinander ausgeführt sein. Das bedeutet, dass ein Sensor, der im Folgenden die zuvor genannten drei Messgrößen messen kann, alternativ auch durch zwei oder drei Sensoren ausgestaltet sein kann, die die entsprechenden Messgrößen messen.

Der Verbraucherverbund **6** weist vorzugsweise wie in der Figur 2 dargestellt einen Verbraucherverbundvorlaufsensor **54** und einen Verbraucherverbundrücklaufsensor **56** auf. Der Verbraucherverbundvorlaufsensor **54** ist in der Weise ausgestaltet, dass dieser die Temperatur $T_{vor}$, des fluiden Energieträgermediums der Verbrauchervolaufleitung **18** messen kann. Außerdem kann der Verbraucherverbundvorlaufsensor **54** dazu ausgestaltet sein, den Druck $P_{vor}$ in der Verbraucherverbundvorlaufleitung **18** (Verbraucherverbundvorlaufdruck) und/oder den Volumenstrom $V_{vor}$ durch die Verbraucherverbundvorlaufleitung **18** (Verbraucherverbundvorlaufvolumenstrom) zu messen. Um die zuvor genannten Messgrößen aufnehmen zu können, Ist der Verbraucherverbundvorlaufsensor **54** an (und/oder in) der Verbraucherverbundvorlaufleitung **18** positioniert.

Analoge Ausgestaltungen gelten für den Verbfaucherverbundrücklaufsensor **56**. Dieser ist an und/oder in der Verbraucherverbundrücklaufleitung **20** positioniert. Der Verbraucherverbundrücklaufsensor ist weiter dazu ausgestaltet, die Temperatur $T_{rück}$ des fluiden Energieträgermediums in der Verbraucherverbundrücklaufleitung **20** (Verbraucherverbundrücklauftemperatur) zu messen. Außerdem kann der Verbraucherverbundrücklaufsensor **56** dazu ausgestaltet sein, den Druck $P_{rück}$ in der Verbraucherverbundrücklaufleitung **20** (Verbraucherverbundrücklaufdruck) und/oder den Volumenstrom $V_{rück}$ durch die Verbraucherverbundrücklaufleitung **20** (Verbraucherverbundrücklaufvolumenstrom) zu messen.

Alternativ oder ergänzend können auch entsprechende Sensoren an und/oder in der Vor- und Rücklaufleitung der Verbraucher positioniert sein. Eine entsprechende Ausgestaltung ist in der Figur 2 ebenfalls dargestellt. An und/oder in der ersten Verbrauchervorlaufleitung **34** ist der erste Verbrauchervorlaufsensor **58** positioniert. Der erste Verbrauchervorlaufsensor **58** ist in der Weise ausgestaltet, dass dieser die Temperatur $T_{1in}$ des fluiden Energieträgermediums in der ersten Verbrauchervorlaufleitung **34** (erste Verbrauchervorfauftemperatur) messen kann. Der erste Verbrauchervorlaufsensor 58 ist des Weiteren in der Art ausgestaltet, dass dieser den Druck $P_{1in}$ in der ersten Verbrauchervorlaufleitung **34** (erster Verbrauchervorlaufdruck) und/oder den Volumenstrom $V_{1in}$ durch die erste Verbrauchervorlaufleitung **34** (erster Verbrauchervorlaufvolumenstrom) messen kann. Ferner ist ein erster Verbraucherrücklaufsensor **60** an und/oder in der ersten Verbraucherrücklaufleitung positioniert. Der erste Verbraucherrücklaufsensor **60** ist in der Weise ausgestaltet, dass dieser die Temperatur $T_{1out}$ des fluiden Energieträgermediums in der ersten Verbraucherrücklaufleitung **48** (erste Verbraucherrücklauftemperatur) messen kann. Der erste Verbraucherrücklaufsensor **60** ist außerdem in der Weise ausgestaltet, dass dieser den Druck $P_{1out}$ in der ersten Verbraucherrücklaufleitung **48** (erster Verbraucherrücktaufdruck) und/oder den Volumenstrom $V_{1out}$ durch den ersten Verbraucherrücklauf **48** (erster Verbraucherrücklaufvolumenstrom) messen kann. Analog zu dem ersten Verbraucher **30** sind auch beim zweiten Verbraucher **32** entsprechende Sensoren an dessen Vor- und Rücklaufleitung vorgesehen. In entsprechender Nomenklatur handelt es sich dabei um den zweiten Verbrauchervorlaufsensor **62** und den zweiten Verbraucherrücklaufsensor **64**. Die Messgrößen des zweiten Verbrauchervorlaufsensors **62** sind die zweite Verbrauchervorlauftemperatur $T_{2in}$, der zweite Ver-

brauchervorlaufdruck $P_{2in}$ und/oder der zweite Verbrauchervorlaufvolumenstrom $V_{2in}$, Die Messgrößen des zweiten Verbraucherrücklaufsensors **64** sind die zweite Verbraucherrücklauftemperatur $T_{2out}$, der zweite Verbraucherrücklaufdruck $P_{2out}$ und/oder der zweite Verbraucherrücklaufvolumenstrom $V_{2out}$.

In Figur 2 nicht dargestellt sind die Signalleitungsverbindungen zwischen einem Regler und mindestens einem der zuvor genannten Sensoren (insbesondere Temperatursensoren an und/oder in den Verbrauchervorlauf und/oder -rücklauf und/oder Verbraucherverbundvorlauf und/oder -rücklauf), zwischen dem Regler und einem Stelleingang der Pumpe **14** und/oder zwischen dem Regler und einem Stelleingang des Mischventils **12**. Für eine entsprechende Vorrichtung zur Regelung in einer Heizungsanlage sind diese jedoch vorzusehen. Denn durch die entsprechenden Signalleitungsverbindungen können die von den Sensoren aufgenommenen Messgrößen an den Regler übermittelt werden. Des Weiteren werden die Stellsignale durch die Signalleitungsverbindungen von dem Regler an die Stelleingänge der Pumpe **14** oder des Mischventils **12** übertragen.

Das Verfahren zur Regelung kennzeichnet sich dadurch, dass der in Figur 2 nicht darstellte Regler durch Stellen der Pumpe **14** eine Temperaturdifferenz des Energieträgermediums zwischen der Verbraucherverbundvorlaufleitung **18** und der Verbraucherverbundrücklaufleitung **20** (Pumpenregeigröße) regelt. Dazu werden mittels der Sensoren **(54, 56)** die Verbraucherverbundvorlauftemperatur $T_{vor}$ und die Verbraucherverbundrücklauftemperatur $T_{rück}$ gemessen. Die entsprechenden Messgrößen werden durch die Signalleitungsverbindung an den Regler übertragen. Der Regler ermittelt die Differenztemperatur $\Delta T$ aus der Differenz der Verbraucherverbundvorlauftemperatur $T_{vor}$ und der Verbraucherverbundrücklauftemperatur $T_{rück}$. Entsprechend dem von dem Regler durchgeführten Regelalgorithmus berechnet der Regler anhand einer einstellbaren Temperaturdifferenzsollgröße (Pumpenreferenzgröße r) und der Differenztemperatur $\Delta T$ eine Pumpenstellgröße u. Die Pumpenstellgröße u wird an das Pumpenstellelement durch Verbindungsleitungen übertragen. Das Pumpenstellelement stellt entsprechend der Pumpenstellgrößen die Pumpe **14.**

Weichen die Pumpenreferenzgröße r und die Differenztemperatur $\Delta T$ voneinander ab, so verändert der Regler den Wert der Pumpenstellgröße u in der Weise, dass die Pumpenregelgröße der Pumpenreferenzgröße möglichst schnell und möglichst mit einem geringen Fehler angenähert wird bzw. im Idealfall die Pumpenregelgröße der Pumpenreferenzgröße entspricht. Damit der Stellaufwand nicht zu groß wird, ist es möglich, dass der Regler einen gewissen vorzugsweise kleinen Pumpenregelfehler zulässt, ohne das Mischventil zu stellen.

Außerdem kann das Verfahren zur Regelung sich dadurch auszeichnen, dass der Regler durch Stellen des Mischventils **12** die Verbraucherverbundvorlauftemperatur $T_{vor}$ oder die Verbraucherverbundrücklauftemperatur $T_{rück}$ regelt. Die Mischventilregelgröße kann also die Verbraucherverbundvorlauftemperatur oder die Verbraucherverbundrücklauftemperatur sein. Anhand einer einstellbaren Verbraucherverbundvorlauftemperatursollgröße oder Verbraucherverbundrücklauftemperatursollgröße, wobei eine dieser Größen die Mischventifreferenzgröße ist, ermittelt der Regler einen Mischventilregelfehler. Den Mischventilregelfehler ermittelt der Regler aus der Differenz der Mischventilreferenzgröße und der Mischventilregelgröße. So kann beispielsweise die Mischventilreferenzgröße eine Temperatur von 24°C sein. Beträgt die Mischventilregelgröße beispielsweise 20°C, so ermittelt der Regler einen Mischventilregelfehler von 4 Kelvin. Hat der Regler ein proportionales Übertragungsverhalten, so ermittelt der Regler eine zu dem Mischventilfehler proportionale Mischventilstellgröße. Die Mischventilstellgröße übermittelt der Regler mittels Signalverbindungsleitungen an das Mischventilstellelement 26. Die Mischventilstellgröße kann analog und/oder digital übertragen werden. Entsprechend der Mischventilstellgröße wird das Mischventil **12** gestellt. Vorausgesetzt, die Verbraucherverbundrücklauftemperatur ist niedriger als die Temperatur des fluiden Energieträgermediums in dem Nlischervorlauf **8**, so verändert sich der Zustand des Mischventils **12** in der Weise, dass der Mischanteil aus dem Mischervorlauf **8** vergrößert und der Mischanteil aus dem Mischerbypass **22** verkleinert wird, sodass die Temperatur des fluiden Energieträgermediums am Ausgang des Mischventils steigt. Der Regler stellt das Mischventil so lange, bis die Mischventilregelgröße mit der Mischventilreferenzgröße Im Wesentlichen übereinstimmt. Damit der Stellaufwand nicht zu groß wird, ist es möglich, dass der Regler einen gewissen vorzugsweise kleinen Mischerfehler zulässt, ohne das Mischventil zu stellen. Der Regler kann also in der Weise ausgestaltet sein, dass dieser sowohl die Pumpenregelgröße als auch die Mischventilregelgröße regelt.

Die Ausgestaltung des Heizkreislaufes **1,** entsprechend der Darstellung aus Figur 2, ermöglicht es ebenfalls, dass der Regler durch Stellen der Pumpe **14,** des ersten Drosselventils **40** und/oder des zweiten Drosselventils **42** eine Temperaturdifferenz des Energieträgermediums zwischen der ersten Verbrauchervorlaufleitung **34** und der ersten Verbraucherrücklaufleitung **48** und/oder zwischen der zweiten Verbrauchervorlaufleitung **36** und der zweiten Verbraucherrücklaufleitung **50** regelt. Dazu sind Signalverbindungsleitungen zwischen dem Regler und dem ersten Verbrauchervorlaufsensor **58**, dem ersten Verbraucherrücklaufsensor **60**, dem zweiten Verbrauchervorlaufsensor **62** und/oder dem zweiten Verbraucherrücklaufsensor **64** ausgebildet Die durch die Sensoren gemessenen Temperaturen werden dem Regler übermittelt.

Anhand von einstellbaren Vor- oder Rücklauftemperatursollgrößen für den ersten oder zweiten Verbraucher ermittelt der Regler aus der Differenz der gemessenen Temperatur und der zuvor genannten einstellbaren Vor- und Rücklauftemperatursollgröße einen ersten Verbraucherregelfehler und einen zweiten Verbraucherregelfehler. Aus dem Pumpenregelfehler, ersten Verbraucherregelfehler und/oder zweiten Verbraucherregelfehler ermittelt der Regler die Pumpenstellgröße sowie eine erste und/oder zweite Drosselventilsstellgröße. Die Stellgrößen werden durch Signalverbindungsleitungen an das Pumpenstellelement **28**, das erste Drosselstellelement **44** und/oder das zweite Drosselstellelement **46** übertragen, sodass der Regler die Pumpe **14**, das erste Drosselventil **40** und/oder das zweite Drosselventil **42** stellt. Durch diese erfindungsgemäße Ausgestaltung des Verfahrens zur Regelung wird es ermöglicht, separat die Temperaturdifferenz des Energieträgermediums zwischen der Verbraucherverbundvorlaufleitung **18** und der Verbraucherverbundrücklaufleitung **20,** die Temperaturdifferenz des Energieträgermediums zwischen der ersten Verbrauchervorlaufleitung **34** und der Verbraucherverbundrücklaufleitung **48** und die Temperaturdifferenz des Energieträgermediums zwischen der zweiten Verbrauchervorlaufleitung **36** und der zweiten Verbraucherrücklaufleitung **50** zu regeln, sodass die jeweilige durch den Regler ermittelte Temperaturdifferenz der jeweiligen Temperatursolldlfterenz (zwischen Vor- und Rücklauf) möglichst dicht angenähert wird oder ihr im Wesentlichen entspricht. Auch wenn der Verbraucherverbund **6** aus der Figur 2 nur einen ersten Verbraucher **30** und einen zweiten Verbraucher **32** aufweist, ist das Verfahren zur Regelung auch auf einen Verbraucherverbund mit mehr als zwei Verbrauchern, beispielsweise 5, 10, 15 oder mehr Verbrauchern, anwendbar.

Für eine besonders einfache Ausgestaltung kann für den Verbraucher mit dem geringsten Strömungswiderstand das diesem Verbraucher zugeordnete Drosselventil entfallen. Denn auch mit dem verbleibenden Drosselventil oder den verbleibenden Drosselventilen kann die Aufteilung der Strömung des fluiden Energieträgermediums zu den Verbrauchern erfolgen.

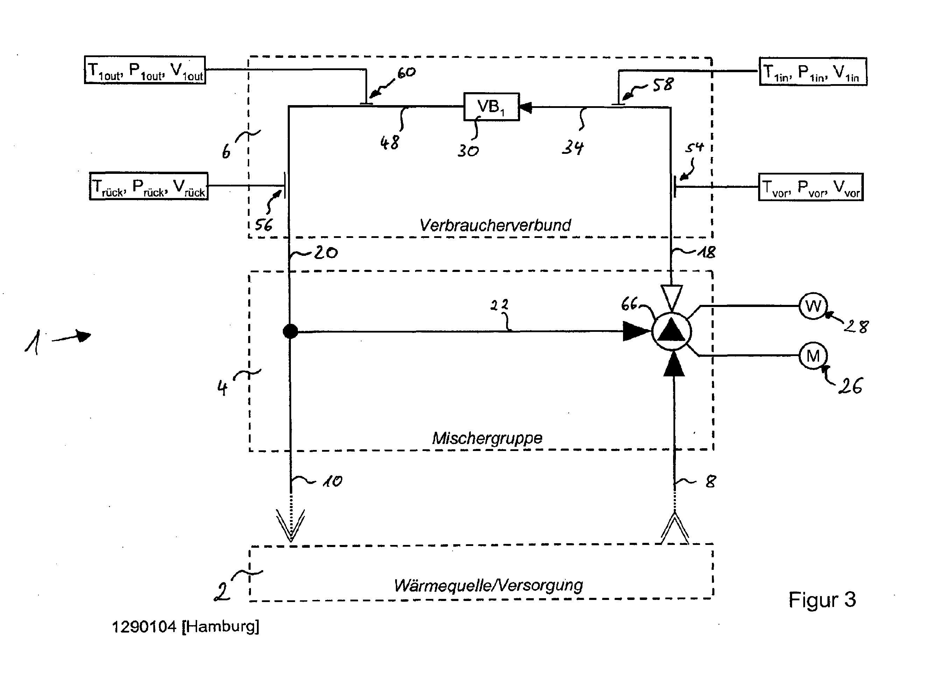

**Figur 3** zeigt eine weitere schematische Darstellung eines Heizkreislaufes **1** mit einer Wärmequelle **2,** einer Mischergruppe **4** und einem Verbraucherverbund **6**. Gegenüber der Darstellung aus Figur 2 zeigt die Darstellung aus Figur 3 eine abweichende Mischergruppe **4** und einen abweichenden Verbraucherverbund **6**. Der Verbraucherverbund 6 weist nunmehr nur noch einen Verbraucher **30** auf. Deshalb bildet die Verbraucherverbundvorlaufleitung **18** auch die Verbrauchervorlaufleitung **34**. Analog bildet die Verbraucherverbundrücklaufleitung **20** die Verbraucherrücklaufleitung **48**. Für das Verfahren zur Regelung sind die Verbraucherverbundvorlaufsensor **54** und Verbraucherverbundrücklaufsensor **56** ausreichend. Grundsätzlich können diese aber auch durch die Verbrauchersensoren ersetzt und/oder erweitert sein.

Die Mischergruppe gemäß der Ausgestaltung aus Figur 3 unterscheidet sich gegenüber der Mischergruppe gemäß der Ausgestaltung aus Figur 2 dadurch, dass die Pumpe und das Mischventil eine Einheit bilden, insbesondere dass das Mischventil in die Pumpe integriert ist. Diese Einheit soll im Folgenden als Mischerpumpe **66** bezeichnet werden. Grundsätzlich zeichnet sich die Mischerpumpe 66 dadurch aus, dass sie Fluidströme aus mehreren Eingängen mischen kann und diese durch mindestens einen Ausgang herauspumpt. Die Mischerpumpe **66** aus Figur 3 zeigt dazu eine mögliche Ausgestaltung. Der Mischervorlauf **8** und der Mischerbypass **22** sind dazu mit den Eingängen der Mischerpumpe **66** verbunden. Mit dem Ausgang der Mischerpumpe **66** verbunden ist die Verbraucherverbundvorlaufleitung **18**. Die Mischerpumpe erfüllt also den Zweck einer Pumpe und eines Mischventils. Deshalb weist die Mischerpumpe **66** auch ein Pumpenstellelement **28** und ein Mischventilstellelement **26** auf. Sowohl der Pumpenzustand als auch der Mischventilszustand der Mischerpumpe **66** kann durch die zuvor genannten Stellelemente separat verstellt werden.

Wie zuvor die Darstellung aus Figur 2, zeigt auch die Darstellung aus Figur 3 alle wesentlichen Elemente eines Heizkreislaufes und eine Peripherie-Anordnung, die es ermöglichst, dass ein Regler durch Stellen der Pumpe, und in diesem Fall durch Stellen der Mischerpumpe **66**, eine Temperaturdifferenz des Energieträgermediums zwischen der Verbraucherverbundvorlaufleitung **18** und der Verbraucherverbundrücklaufleitung **20** regelt. Die weiteren Verfahrensvarianten, die zu der Darstellung aus Figur 2 erläutert worden sind, sind analog für die Anordnung aus der Figur 3 ebenfalls anwendbar.

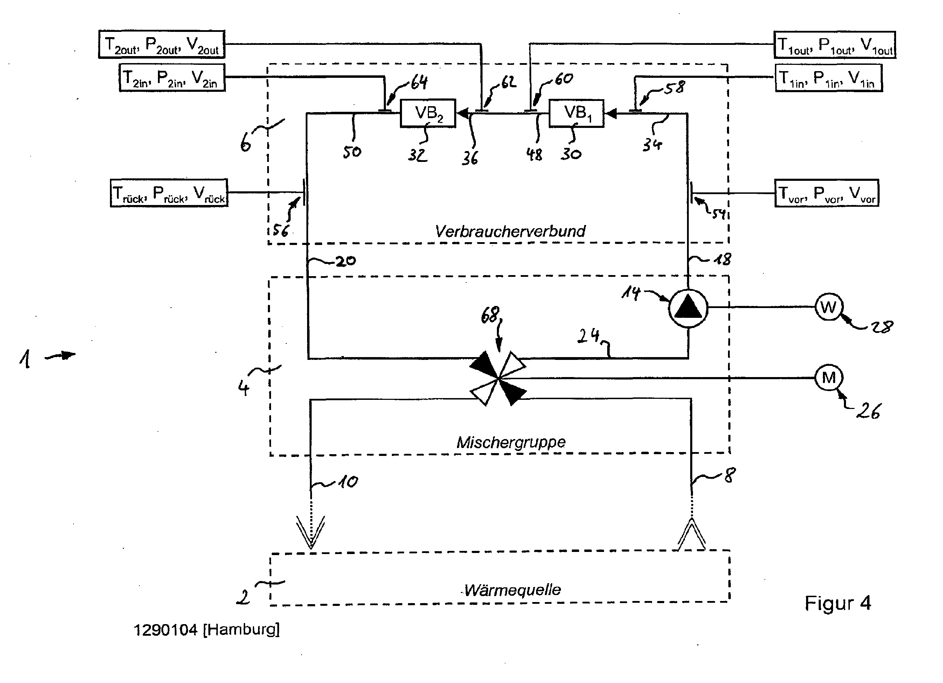

In **Figur 4** ist eine weitere schematische Darstellung eines Heizkreislaufes 1 mit einer Wärmequelle **2**, einer Mischergruppe **4** und einem Verbraucherverbund **6** gezeigt. Gegenüber der Ausgestaltung des Heizkreislaufes 1 aus Figur 2 weichen die Mischergruppe **4** und der Verbraucherverbund **6** ab.

Der Verbraucherverbund **6** weicht insbesondere dadurch ab, dass ein erster Verbraucher **30** und ein zweiter Verbraucher **32** nicht parallel, sondern seriell hintereinander verschaltet bzw. angeordnet sind. Ferner weist der Verbraucherverbund **6** keine Drosselventile auf. Des Weiteren bildet die Verbraucherverbundvorlaufleitung **18** die Vorlaufleitung **34** des ersten Verbrauchers **30**. Analog bildet die Verbraucherverbundrücklaufleitung **20** die Verbraucherrücklaufleitung **50** des zweiten Verbrauchers **32**. Da der erste Verbraucher **30** und der zweite Verbraucher **32** in. Serie zueinander verschaltet sind, bildet auch die erste Verbraucherrücklaufleitung **48** die zweite Verbrauchervorlaufleitung **36** (oder umgekehrt). Grundsätzlich entspricht die Anordnung der Sensoren **54**, **50**, **58**, **60**, **62** und **64** der Anordnung der Sensoren aus Figur 2.

Die Mischergruppe weicht des Weiteren durch das Vierwegemischventil **68** ab. Jeweils mit einem Eingang des Verwegemischventils **68** verbunden sind die Verbraucherverbundrücklaufleitung **20** und der Mischervorlauf **8**. Jeweils mit einem Ausgang des Vierwegemischventils **68** verbunden ist der Mischerrücklauf **10** und die Pumpenzulaufleitung **24**. Analog zu den bereits zuvor eingeführten Mischventilen weist auch das Vierwegemischventil **68** ein Mischventilstellelement **26** auf, sodass eine Mischventilstellgröße der Regelung umgesetzt werden kann. Die Mischventilstellgröße kann die Position eines Fluidsteuerelements insbesondere eines Drehschiebers, eines Ventilkegels oder einer Ventilspindel des Mischventils sein. Sie bilden vorzugsweise auch den Zustand des Mischventils. Und in Abhängigkeit des Zustands des Mischventils wird durch das Vierwegemischventil das fluide Energieträgermedium aus den Zuleitungen, die an die Eingänge des Vierwegemischventils **68** gekoppelt sind, gemischt und an die Ausgänge verteilt, die wie bereits zuvor genannt an die Pumpenzulaufleitung **24** und der Mischerrücklauf **10** gekoppelt sind.

Die Ausgestaltungsvariante des Heizkreislaufes 1 aus Figur 4 eignet sich auch zur Anwendung des erfindungsgemäßen Verfahrens zur Regelung. Denn ein Regler, der in der Darstellung aus der Figur 4 nicht dargestellt ist, kann durch Stellen der Pumpe **14** eine Temperaturdifferenz des Energieträgermediums zwischen der Verbraucherverbundvorlaufleitung **18** und der Verbraucherverbundrücklaufleitung **20** regeln. Dazu misst der Verbraucherverbundvorlaufsensor **54** die Verbraucherverbundvorlauftemperatur $T_{vor}$ und der Verbraucherverbundrücklaufsensor **56** die Verbraucherverbundrücklauftemperatur $T_{rück}$ Die beiden Sensoren **54** und **56** sind über Signalverbindungsleitungen mit dem Regler verbunden, sodass die Werte der gemessenen Temperaturen an den Regler übertragen werden können. Der Regler misst aus den beiden zuvor genannten Temperaturen die Differenztemperatur. Des Weiteren ermittelt der Regler aus der Differenztemperatur und einer Solldifferenztemperatur den Pumpenregelfehler, aus dem der Regler entsprechend seinem Übertragungsverhalten die Pumpenstellgröße ermittelt. Die Pumpenstellgröße wird durch eine Signalleitung an das Pumpenstellelement **28** übertragen, sodass sich der Zustand der Pumpe entsprechend der Pumpenstellgröße verändert.

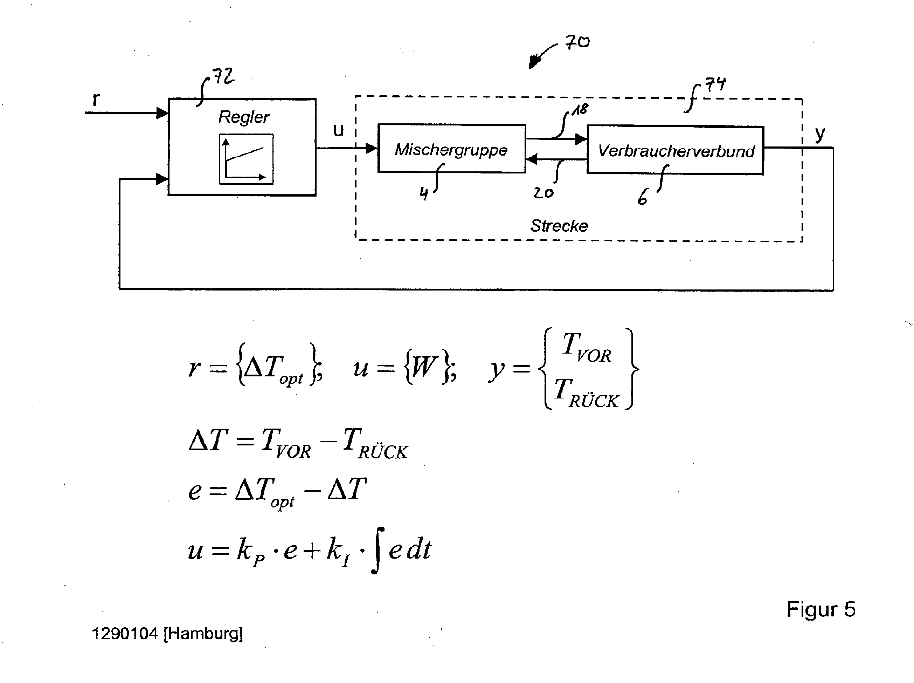

**Figur 5** zeigt eine schematische Darstellung eines Regelkreises **70** für eine Heizungsanlage, wie sie beispielsweise in den Figuren 2, 3 oder 4 dargestellt ist. Der Regelkreis **70** weist einen Regler **72** und eine Strecke **74** auf. Von der Strecke **74** umfasst sind die Mischergruppe 4 und der Verbraucherverbund 6. Eine erste Eingangsgröße des Reglers ist die Referenzgröße r, die für die Ausgestaltungsvariante gemäß der Figur 5 die optimale Differenztemperatur $\Delta T_{opt}$ ist. Eine weitere Eingangsgröße des Reglers ist die Ausgangsgröße Y der Strecke. Die Ausgangsgröße Y ist eine vektorielle Größe und umfasst die Verbraucherverbundvorlauftemperatur $T_{vor}$, und die Verbraucherverbundrücklauftemperatur $T_{rück}$, Die beiden Temperaturgrößen werden durch den Verbraucherverbundvorlaufsensor **54** und den Verbraucherverbundrücklaufsensor **56** gemessen, wobei die Sensoren in Figur 5 nicht dargestellt sind, jedoch bereits in den Figuren 2, 3 und 4 eingeführt und erläutert wurden. Der Regler ermittelt die Differenztemperatur $\Delta T$ aus der Verbraucherverbundvorlauftemperatur $T_{vor}$ abzüglich der Verbraucherverbundrücklauftemperatur $T_{rück}$. Außerdem ermittelt der Regler den Pumpenregelfehler e aus der optimalen Differenztemperatur $\Delta T_{opt}$, abzüglich der Differenztemperatur $\Delta T$. Anhand des Pumpenregelfehlers ermittelt der Regler des Weiteren die Pumpenstellgröße u. Hat der Regler ein proportionales sowie integrales Übertragungsverhalten, kann das Übertragungsverhalten von dem Pumpenregelfehler zu der Pumpenstellgröße auch durch die folgende mathematische Gleichung beschrieben werden:

$$u = k_P \cdot e + k_i \cdot \oint dt$$

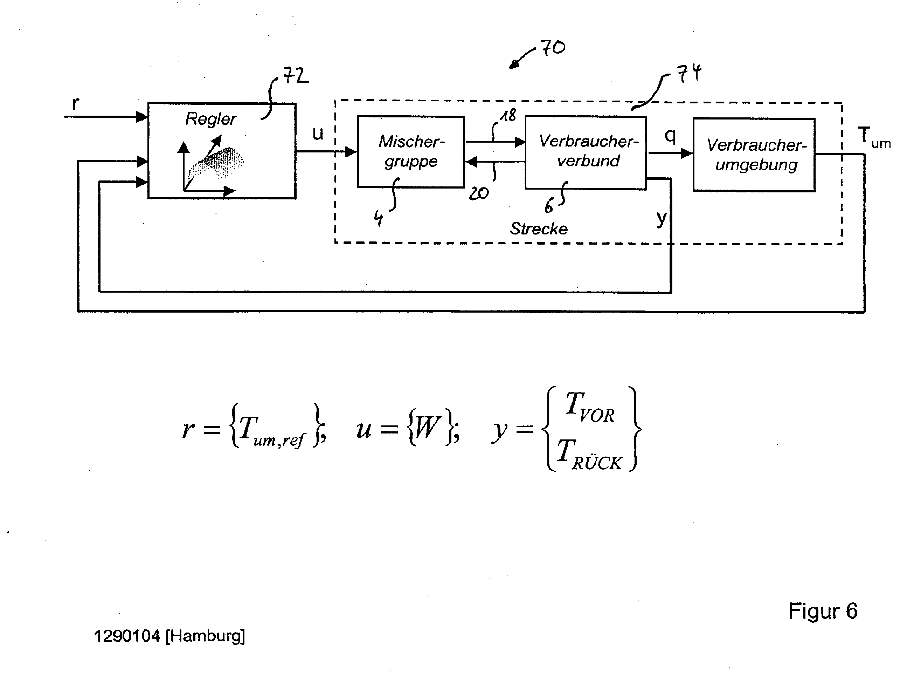

Der Faktor kp ist die Verstärkung des P-Gliedes, und der Faktor $k_I$ ist die Verstärkung des 1-Gliedes.
Die Stellgröße u wird von dem Regler **72** durch eine Signalleitungsverbindung an die Strecke **74** bzw. an die Mischergruppe **4** übertragen. Der Zustand der Pumpe verändert sich sodann entsprechend der Pumpenstellgröße. Ist die Pumpenstellgröße beispielsweise die Spannung der Pumpe, so ist die Leistung der Pumpe geringer, wenn auch die Spannung der Pumpe sinkt. Umgekehrt steigt die Leistung der Pumpe mit einer höheren Spannung. Alternativ und/oder ergänzend kann die Stellgröße auch die Frequenz der elektrischen Spannungsversorgung der Pumpe sein. Mit Veränderung der Frequenz kann ebenfalls die Pumpleistung der Pumpe verändert werden.
Da der Verbraucherverbund **6** und die Mischergruppe **4** durch die Verbraucherverbundvorlaufleitung **18** und die Verbraucherverbundrücklaufleitung **20** miteinander gekoppelt sind, ist auch die Differenztemperatur des Energieträgermediums zwischen der Verbraucherverbundvorlaufleitung **18** und der Verbraucherverbundrücklaufleitung **20** funktional von dem Zustand der Pumpe abhängig. Im regelungstechnischen Sinne ist somit die Pumpenregelgröße durch die Pumpenstellgröße steuerbar. Da die Verbraucherverbundvorlauftemperatur $T_{vor}$, und die Verbraucherverbundrücklauftemperatur $T_{rück}$ gemessen und deren Werte durch Signalleitungsverbindungen an den Regler übermittelt werden, handelt es sich hierbei um einen geschlossenen Regelkreis.
Die Darstellung aus **Figur 6** zeigt einen Regelkreis **70**, der im Wesentlichen dem Regelkreis aus Figur 5 entspricht. Wie zuvor umfasst der Regelkreis **70** auch einen Regler **72** und eine Strecke **74**. Ebenfalls sind die Mischergruppe **4** und der Verbraucherverbund **6** in gleicher Weise mitelnander verknüpft und/oder verkoppelt wie in der Ausgestaltung aus Figur 5. Dem gegenüber ergänzend weist die Strecke die Verbraucherumgebung auf. Verbraucherverbund und Verbraucherumgebung sind durch die Verbindung Q gekoppelt. Dies kann eine Wärmeleistungskopplung sein, insbesondere wenn der Verbraucherverbund **6** mehrere Radiatoren aufweist, die thermische Energie von dem fluiden Energieträgermedium an die Umgebung abgeben können. Die Temperatur der Verbraucherumgebung $T_{um}$ kann beispielsweise durch einen Verbraucherumgebungstemperatursensor gemessen werden und durch eine Signalleitung an den Regler übermittelt werden, wie es auch in der Figur 6 dargestellt ist. Ebenfalls an den Regler übermittelt werden die Verbraucherverbundvorlauftemperatur $T_{vor}$ und die Verbraucherverbundrücklauftemperatur $T_{rück}$. Die Referenzgröße des Reglers Ist die Solltemperatur der Verbraucherumgebung (Referenzumgebungstemperatur) $T_{um,ref}$. Aus der Referenzgröße und den Messgrößen ermittelt der Regler die Stellgröße u. Dazu kann der Regler auf die Daten eines Kennfeldes zugreifen. Dieses Kennfeld kann beispielsweise in einem Speicher des Reglers gespeichert sein. Das Kennfeld kann aber auch an einem anderen Ort gespeichert sein, wobei der Regler durch eine Signalleitungsverbindung auf das Kennfeld an dem anderen Ort zugreifen kann. Das Kennfeld tabelliert Pumpenreferenzgrößen insbesondere Referenzverbraucherumgebungstemperaturen, Wirkungsgrade, Verbraucherverbundvorlauftemperaturen, Verbraucherverbundrücklauftemperaturen und/oder Verbraucherumgebungstemperaturen zueinander.

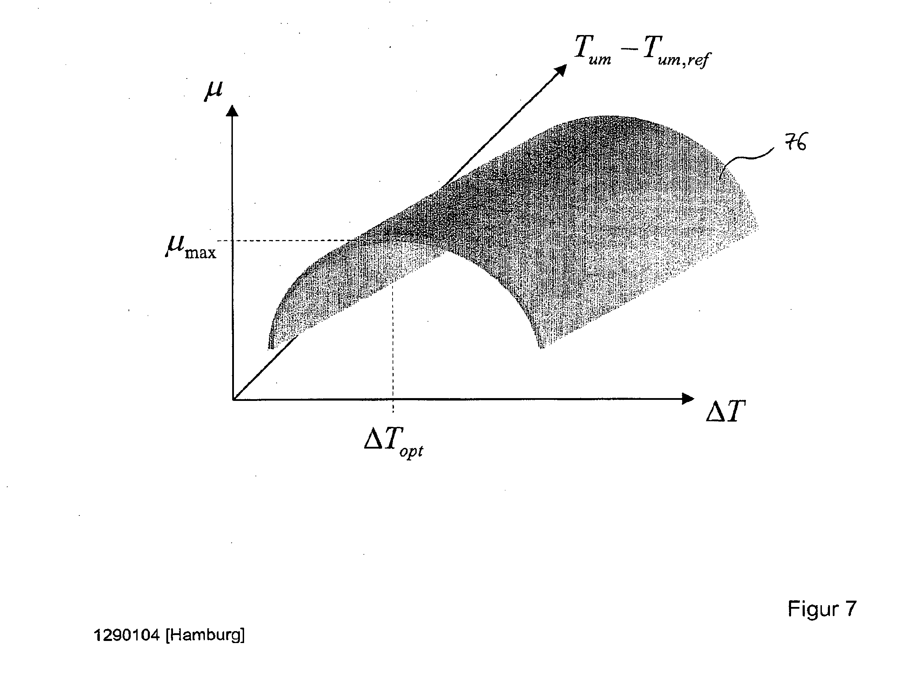

Ein beispielhafter Ausschnitt des Kennfeldes ist in **Figur 7** optisch als Fläche dargestellt. Der Raum, in dem das Kennfeld **76** als dreldimenslonales Objekt dargestellt ist, wird durch ein orthogonales Koordinatensystem aufgespannt, dessen Achsen die Differenztemperatur $\Delta T$ (Differenz aus Verbraucherverbundvorlauftemperatur $T_{vor}$ und Verbraucherverbundrücklauftemperatur $T_{rück}$), der Wirkungsgrad $\mu$ und die Differenz der Referenzverbraucherumgebungstemperatur $T_{um,ref}$ und der Verbraucherumgebungstemperatur $T_{um}$. sind. Das Kennfeld ist eine konkave, nach unten hin offene dreidimensionale Fläche. Das Kennfeld zeigt, dass der Wirkungsgrad $\mu$ von den Werten der Differenztemperatur und der Verbraucherumgebungstemperatur $\Delta T$ und Referenzverbraucherumgebungstemperatur abhängt.

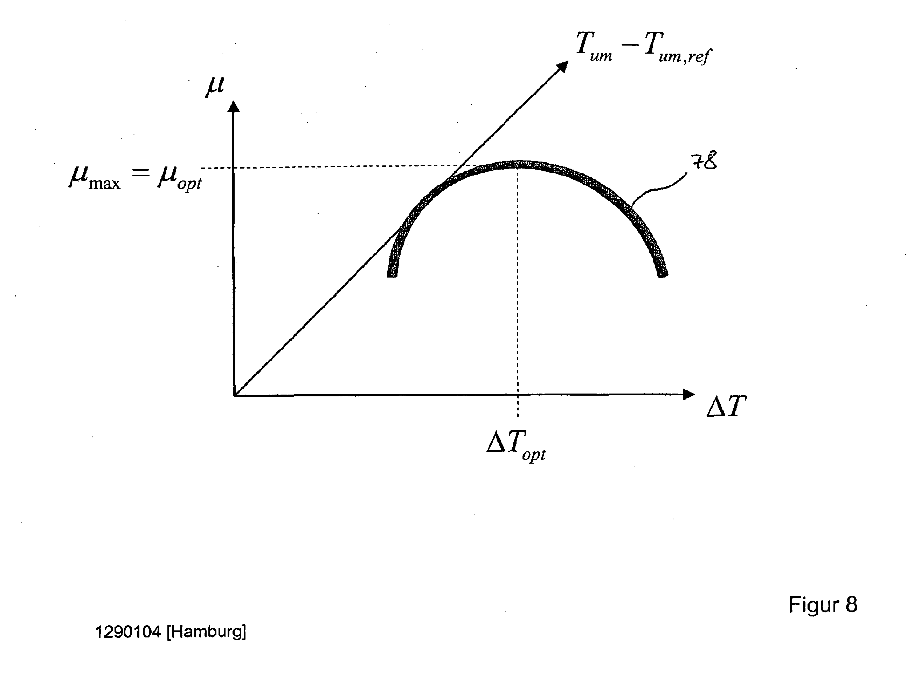

Ist die Refererizverbraucherumgebungstemperatur $T_{um,ref}$ bestimmt und die Verbraucherumgebungstemperatur $T_{um}$ durch einen Sensor gemessen, verringert sich das Kennfeld um eine Dimension. In **Figur 8** ist der verbleibende funktionale Zusammenhang zwischen dem Wirkungsgrad $\mu$ und der Differenztemperatur $\Delta T$ gezeigt. Generell ermittelt der Regler auf diese Weise eine Kennlinie **78**, wobei insbesondere auch die Verbraucherverbundvorlauftemperatur und/oder Verbraucherverbundrücklauftemperatur mit ihren gemessenen Werten festgelegt werden. Danach ermittelt der Regler den maximalen Wirkungsgrad $\mu_{opt}$ aus der Kennlinie **78**. Aus dem Stand der Technik sind dazu eine Reihe von Verfahren bekannt, die das Maximum einer Kennlinie ermitteln können. Daraufhin ermittelt der Regler die zu dem maximalen Wirkungsgrad $\mu_{opt}$ gehörige Pumpenreferenzgröße, die vorzugsweise die optimale Differenztemperatur $\Delta T_{opt}$ ist. Während des Betriebes des Verfahrens zur Regelung ermittelt der Regler wiederholt die Pumpenreferenzgröße. Durch Differenzbildung aus der optimalen Differenztemperatur $\Delta T_{opt}$ und der Differenztemperatur $\Delta T$ ermittelt der Regler einen Regelfehler. Wie bereits zuvor erläutert ist der Regler auch in der Weise ausgestaltet, dass dieser aus dem Regelfehler die Regeistellgröße, insbesondere die Pumpenstellgröße und/oder die Mischventilstellgröße ermittelt.

## Patentansprüche

1. **Verfahren zur Regelung,** welches in einer Heizungsanlage ausgeführt wird, die eine Wärmequelle und eine Pumpe in einem Heizkreislauf aufweist, der von einem fluiden Energieträgermedium durchflossen ist und der einen Verbraucherverbund mit mindestens einem Verbraucher, einer Verbraucherverbundvorlaufleitung und einer Verbraucherverbundrücklaufleitung aufweist, **dadurch gekennzeichnet, dass** ein Regler durch Stellen der Pumpe eine Temperaturdifferenz des Energieträgermediums zwischen der Verbraucherverbundvorlaufleitung und der Verbraucherverbundrücklaufleitung (Pumpen-Regelgröße) anhand einer einstellbaren Vor- und/oder Rücklauftemperatursollgröße (MischventilReferenzgröße) regelt.

2. Verfahren nach einem der vorhergehenden Ansprüche, **dadurch gekennzeichnet, dass** der Heizkreislauf, insbesondere der Verbraucherverbund, ein Mischventil aufweist und der Regler durch Stellen des Mischventils eine Vor- oder Rücklauftemperatur des Verbraucherverbundes (Mischventil-Regelgröße) regelt.

3. Verfahren zur Regelung nach einem der vorhergehenden Ansprüche, **dadurch gekennzeichnet, dass** der Regler die Pumpen-Regelgröße anhand einer einstellbaren Differenztemperatursollgröße (Pumpen-Referenzgröße) regelt.

4. Verfahren zur Regelung nach einem der vorhergehenden Ansprüche, **dadurch gekennzeichnet, dass** der Pumpen-Referenzgröße eine Temperatur aus dem Bereich von 0,5 bis 12 K, insbesondere aus dem Bereich von 1 bis 8 K, vorzugsweise von 1, 2, 3, 4, 5, 6, 7 oder 8 K zugewiesen wird.

5. Verfahren zur Regelung nach einem der vorhergehenden Ansprüche, **dadurch gekennzeichnet, dass** die Pumpen-Referenzgröße aus einem Kennfeld (Pumpen-Kennfeld), das Pumpen-Referenzgrößen, insbesondere von Referenzverbraucherumgebungstemperaturen, Wirkungsgraden, Vorlauftemperaturen, Rücklauftemperaturen und/oder Verbraucher-Umgebungstemperaturen zueinander tabelliert, ermittelt wird, so dass der zugehörige Wirkungsgrad möglichst hoch ausfällt.

6. Verfahren zur Regelung nach dem vorhergehenden Anspruch, **dadurch gekennzeichnet, dass** die Ermittlung der Pumpen-Referenzgröße folgende Schritte umfasst:

a) Messen der Verbraucherverbundvorlauftemperatur und/oder Verbraucherverbundrücklauftermperatur und/oder VerbraucherUmgebungstemperatur; danach

b) Ermitteln einer Kennlinie, die Pumpen-Referenzgrößen Wirkungsgrade zuordnet, aus dem Pumpen-Kennfeld, wobei die Verbraucherverbundvorlauftemperatur und/oder Verbraucherverbundrücklauftemperatur und/oder Verbraucher-Umgebungstemperatur mit ihren gemessenen Werten festgelegt werden: danach

c) Ermitteln des maximalen Wirkungsgrades aus der Kennlinie und danach der zugehörigen Pumpen-Referenzgröße.

7. Verfahren zur Regelung nach einem der vorhergehenden zwei Ansprüche, **dadurch gekennzeichnet, dass** während eines Betriebes die Ermittlung der Pumpen-Referenzgröße wiederholt durchgeführt wird.

8. Verfahren zur Regelung nach einem der vorhergehenden Ansprüche, **dadurch gekennzeichnet, dass** bei mehreren Verbrauchern eines Verbraucherverbundes das Pumpen-Kennfeld aus einem gemittelten Kennfeld der Verbraucher besteht, das vorzugsweise aus dem Quotienten der Summe der Produkte der Kennfelder des jeweiligen Verbrauches mit dessen insbesondere maximalen Verbraucherabgabeleistung zu der Summe der insbesondere maximalen Verbrauchernennleistungen aller Verbraucher eines Verbraucherverbundes besteht.

9. Verfahren zur Regelung nach einem der vorhergehenden Ansprüche, **dadurch gekennzeichnet, dass** der Regler aus der Differenz aus Pumpen-Referenzgröße und Pumpen-Regelgröße (Pumpenregelfehler) eine Pumpen-Stellgröße ermittelt, wobei die Pumpen-Stellgröße eine Steuergröße der Pumpe ist.

10. Verfahren zur Regelung nach einem der vorhergehenden Ansprüche, **dadurch gekennzeichnet, dass** der Regler ein proportionales, integrales und/oder differenzierendes Übertragungsverhalten von Pumpenregelfehler zu PumpenStellgröße aufweist.

11. Verfahren zur Regelung nach einem der vorhergehenden Ansprüche, **dadurch gekennzeichnet, dass** eine Steuergröße der Pumpe und/oder die PumpenStellgröße die Drehzahl, die Leistung, die Fördermenge, der Druck und/oder der Rotorflügelwinkel der Pumpe oder eine zu mindestens einer der Größen im Wesentlichen proportionalen und/oder von mindestens einer der Größen im Wesentlichen funktional abhängigen Größe ist.

12. Verfahren zur Regelung nach einem der vorhergehenden Ansprüche, **dadurch gekennzeichnet, dass** eine Steuergröße der Pumpe und/oder die PumpenStellgröße die Spannung, der Strom, die Frequenz, die Pulsfrequenz, die Pulsweite und/oder eine sonstige Größe eines elektrischen Motors der Pumpe oder eine zu mindestens einer der Größen im Wesentlichen proportionale und/oder von mindestens einer der Größen im Wesentlichen funktional abhängige Größe ist.

13. Verfahren zur Regelung nach einem der vorhergehenden Ansprüche, **dadurch gekennzeichnet, dass** der Regler anhand einer einstellbaren Vor- und/oder Rücklauftemperatursollgröße (Mischventil-Referenzgröße) die MischventilRegelgröße regelt.

14. Verfahren zur Regelung nach einem der vorhergehenden Ansprüche, **dadurch gekennzeichnet, dass** der Regler aus der Differenz aus der MischventilReferenzgröße und der Mischventil-Regelgröße (Mischventilregelfehler) eine Mischventil-Stellgröße ermittelt, wobei die Mischventil-Stellgröße eine Steuergröße des Mischventils und vorzugsweise der Zustand und/oder die Position eines Fluidsteuerelements, insbesondere eines Drehschiebers, eines Ventilkegels oder einer Ventilspindel, des Mischventils ist.

$$\frac{P_{VB}}{P_{vor}} = \mu$$

Figur 1

EP 2 442 052 A1

1290104 [Hamburg]

EP 2 442 052 A1

$T_{2out}, P_{2out}, V_{2out}$

$T_{1out}, P_{1out}, V_{1out}$

$T_{2in}, P_{2in}, V_{2in}$

$T_{1in}, P_{1in}, V_{1in}$

$VB_2$

$A_1$

$VB_1$

$A_2$

$T_{rück}, P_{rück}, V_{rück}$

$T_{vor}, P_{vor}, V_{vor}$

Verbraucherverbund

W

Mischergruppe

M

Wärmequelle/Versorgung

Figur 2

1290104 [Hamburg]

EP 2 442 052 A1

$T_{1out}, P_{1out}, V_{1out}$

$T_{1in}, P_{1in}, V_{1in}$

*60*

*58*

VB$_1$

*48*  *30*  *34*

*6*

*54*

$T_{rück}, P_{rück}, V_{rück}$

$T_{vor}, P_{vor}, V_{vor}$

*56*

Verbraucherverbund

~*20*

~*18*

*22*

*66*

W  *28*

*4*

M  *26*

Mischergruppe

~*10*

~*8*

*2*

Wärmequelle/Versorgung

*1*

Figur 3

1290104 [Hamburg]

Figur 4

1290104 [Hamburg]

$$r = \{\Delta T_{opt}\}; \quad u = \{W\}; \quad y = \left\{ \begin{array}{c} T_{VOR} \\ T_{R\ddot{U}CK} \end{array} \right\}$$

$$\Delta T = T_{VOR} - T_{R\ddot{U}CK}$$

$$e = \Delta T_{opt} - \Delta T$$

$$u = k_P \cdot e + k_I \cdot \int e\, dt$$

Figur 5

EP 2 442 052 A1

EP 2 442 052 A1

$$r = \left\{T_{um,ref}\right\}; \quad u = \left\{W\right\}; \quad y = \left\{\begin{array}{c} T_{VOR} \\ T_{RÜCK} \end{array}\right\}$$

Figur 6

Figur 7

EP 2 442 052 A1

Figur 8

1290104 [Hamburg]

EP 2 442 052 A1

Europäisches
Patentamt

European
Patent Office

Office européen
des brevets

# EUROPÄISCHER RECHERCHENBERICHT

Nummer der Anmeldung

EP 10 01 3546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 018 627 A2 (DUTCH HEATPUMP B V [NL] INVENTUM HOLDING B V [NL]) 12. Juli 2000 (2000-07-12) | 1-14 | INV. F25B30/02 G05D23/19 |
| Y | * Absätze [0004], [0020], [0021] * * Anspruch 15 * ----- | 2,5-8 | |
| Y | EP 0 730 213 A2 (BAUNACH HANS GEORG [DE]) 4. September 1996 (1996-09-04) * Spalte 23, Zeile 47 - Spalte 24, Zeile 9 * * Anspruch 9 * * Abbildungen 4,11 * ----- | 2,5-8 | |

| | RECHERCHIERTE SACHGEBIETE (IPC) |
|---|---|
| | F25B G05D |

Der vorliegende Recherchenbericht wurde für alle Patentansprüche erstellt

| Recherchenort | Abschlußdatum der Recherche | Prüfer |
|---|---|---|
| München | 4. März 2011 | Westholm, Mats |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 01 3546

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-03-2011

| Im Recherchenbericht angeführtes Patentdokument | | Datum der Veröffentlichung | Mitglied(er) der Patentfamilie | | Datum der Veröffentlichung |
|---|---|---|---|---|---|
| EP 1018627 | A2 | 12-07-2000 | AT<br>DE<br>NL | 334359 T<br>60029497 T2<br>1010979 C2 | 15-08-2006<br>03-05-2007<br>11-07-2000 |
| EP 0730213 | A2 | 04-09-1996 | DE | 19507247 A1 | 05-09-1996 |

Für nähere Einzelheiten zu diesem Anhang : siehe Amtsblatt des Europäischen Patentamts, Nr.12/82

EPO FORM P0461

**EP 2 442 052 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4124304 C2